# EUROPÄISCHE PATENTSCHRIFT

(11) **EP 2 989 669 B1**
(45) Veröffentlichungstag und Bekanntmachung des Hinweises auf die Patenterteilung: **05.10.2022**
(21) Anmeldenummer: 14718546.6
(22) Anmeldetag: 09.04.2014
(51) Int. Cl.: H01M 10/42, H01M 10/48, H01M 50/502

(54) **VERFAHREN ZUM HERSTELLEN EINES BATTERIENKONTAKTIERUNGSSYSTEMS UND BATTERIENKONTAKTIERUNGSSYSTEM**
BATTERIES CONTACTING SYSTEM AND PROCESS FOR ITS PRODUCTION
SYSTEME DE CONTACTE DE BATERIES ET PROCEDE POUR SA PRODUCTION

(30) Priorität: 23.04.2013 DE 102013207356
(43) Veröffentlichungstag der Anmeldung: 02.03.2016
(73) Patentinhaber: ElringKlinger AG, 72581 Dettingen (DE)
(72) Erfinder: FRITZ, Wolfgang, 72555 Metzingen (DE)
(74) Vertreter: Hoeger, Stellrecht & Partner Patentanwälte mbB
(86) Internationale Anmeldenummer: PCT/EP2014/057133
(87) Internationale Veröffentlichungsnummer: WO 2014/173683

(56) Entgegenhaltungen:
- WO-A2-2005/039012
- DE-A1-102009 050 315
- US-A- 4 920 019

## Beschreibung

Die vorliegende Erfindung betrifft ein Zellkontaktierungssystem für eine elektrochemische Vorrichtung.

Ein solches Zellkontaktierungssystem umfasst vorzugsweise ein Stromleitungssystem mit einem oder mehreren Zellverbindern zum elektrisch leitenden Verbinden von Zellterminals verschiedener elektrochemischer Zellen und ein Signalleitungssystem mit einer oder mehreren Signalleitungen zum elektrisch leitenden Verbinden einer Signalquelle mit einem Signalleitungsanschluss des Zellkontaktierungssystems.

Ein solches Zellkontaktierungssystem dient dazu, einerseits mittels des Stromleitungssystems das Fließen eines Leistungsstroms von und zu den elektrochemischen Zellen der elektrochemischen Vorrichtung zu ermöglichen und andererseits mittels des Signalleitungssystems eine Einzelzellüberwachung hinsichtlich physikalischer Messgrößen wie beispielsweise der Spannung und der Temperatur zu bewerkstelligen. Hierzu werden beispielsweise Potentialunterschiede zwischen verschiedenen Zellverbindern gemessen und/oder Temperaturen in der Nähe der Zellverbinder mittels geeigneter Temperatursensoren erfasst. Die Signalquellen oder Messstellen sind durch das Signalleitungssystem elektrisch leitend mit dem als Schnittstelle zur Überwachungseinheit der elektrochemischen Vorrichtung dienenden Signalleitungsanschluss verbunden.

Bei bekannten Zellkontaktierungssystemen sind die Zellverbinder zumeist als Stanzbiegeteile oder als Litzen mit Kabelschuhen ausgebildet.

Der Signalleitungsanschluss ist bei bekannten Zellkontaktierungssystemen entweder auf einer Leiterplatte aufgelötet oder Bestandteil eines Kabelbaums.

Bei Verwendung einer Leiterplatte ist es häufig erforderlich, den Zellverbinder aufwändig zu beschichten, bevor dieser mit einer Leiterbahn der Leiterplatte verlötet werden kann.

Die Herstellung und Verarbeitung eines Kabelbaums ist aufwändig und kostspielig, da hierfür manuelle Tätigkeiten erforderlich sind. Ferner können bei der Herstellung eines Kabelbaums Fehler aufgrund falscher Zuordnung der Leitungen des Kabelbaums auftreten.

Die DE 10 2009 050 315 A1, die WO 2005/039012 A2 und die US 4 920 019 A offenbaren jeweils die Herstellung eines Stromleiterverbundes für das Stromleitungssystem eines Zellkontaktierungssystems.

Der vorliegenden Erfindung liegt die Aufgabe zugrunde, ein Verfahren zum Herstellen eines Zellkontaktierungssystems zu schaffen, welches einfach durchführbar ist und die Herstellung eines zuverlässigen und positionsgenauen Signalleitungssystems ermöglicht.

Diese Aufgabe wird erfindungsgemäß gelöst durch ein Verfahren zum Herstellen eines Zellkontaktierungssystems für eine elektrochemische Vorrichtung nach Anspruch 1.

Der vorliegenden Erfindung liegt das Konzept zugrunde, mehrere Signalleitungsbahnen eines Signalleitungssystems des Zellkontaktierungssystems gemeinsam herzustellen und als Einheit zu handhaben, bis die Signalleitungsbahnen in der gewünschten Positionierung in einem Trennwerkzeug oder an einem Trägerelement des Zellkontaktierungssystems, insbesondere an einer Trägerplatte, angeordnet sind und/oder, vorzugsweise stoffschlüssig, mit der jeweils zugeordneten Signalquelle, das heißt mit jeweils einem Zellverbinder, Zellanschluss oder Sensorelement des Zellkontaktierungssystems verbunden sind, und dann das mindestens eine Verbindungselement von den Signalleitungsbahnen abzutrennen und zu entfernen, um die verschiedenen Signalleitungsbahnen elektrisch voneinander zu isolieren.

Bei dem erfindungsgemäßen Verfahren kann das Entfernen des mindestens einen Verbindungsstegs vor oder nach dem Verbinden der Signalleitungsbahnen des Signalleitungsbahnenverbundes mit jeweils einem Zellverbinder, Zellanschluss oder Sensorelement des Zellkontaktierungssystems erfolgen.

Beispielsweise kann mindestens ein aus dem Ausgangsmaterial herausgetrennter Signalleitungsbahnenverbund in ein Trennwerkzeug eingelegt werden, in welchem mindestens ein Verbindungselement entfernt wird, worauf Signalleitungsbahnen des Signalleitungsbahnenverbundes separat voneinander von einer Montageperson oder mittels einer Handhabungsvorrichtung, insbesondere einer Greifvorrichtung, auf das Trägerelement umgesetzt und dann mit jeweils einem Zellverbinder, Zellanschluss oder Sensorelement des Zellkontaktierungssystems verbunden werden.

Bei dieser Variante sind vorzugsweise keine Löcher im Trägerelement an den Stellen erforderlich, welche den Trennstellen der Verbindungselemente im Signalleitungsbahnenverbund entsprechen.

Alternativ oder ergänzend hierzu kann auch vorgesehen sein, dass mindestens ein Signalleitungsbahnenverbund direkt an dem Trägerelement positioniert wird, worauf Signalleitungsbahnen des Signalleitungsbahnenverbundes durch Entfernen mindestens eines Verbindungselements elektrisch voneinander getrennt werden und mit jeweils einem Zellverbinder, Zellanschluss oder Sensorelement des Zellkontaktierungssystems verbunden werden.

Bei dieser Variante sind vorzugsweise Löcher im Trägerelement an den Stellen vorgesehen, welche den Trennstellen der Verbindungselemente im Signalleitungsbahnenverbund entsprechen, damit dort das Abtrennen des jeweiligen Verbindungselements mittels eines durch das jeweilige Loch hindurchtretenden Trennwerkzeugs erfolgen kann.

Es besteht ferner die Möglichkeit, mindestens ein Verbindungselement des Signalleitungsbahnensystems zu entfernen, wenn der Signalleitungsbahnenverbund getrennt von dem Trägerelement in einem Trennwerkzeug angeordnet ist, und mindestens ein weiteres Verbindungselement zu entfernen, wenn der Signalleitungsbahnenverbund an dem Trägerelement angeordnet ist.

Das erfindungsgemäße Verfahren zum Herstellen eines Zellkontaktierungssystems wird vorzugsweise vollautomatisch ausgeführt und stellt somit eine sehr kostengünstige Lösung dar.

Außerdem sind Fehler durch eine falsche Zuordnung der Signalleitungsbahnen zu den Signalquellen und/oder zu den Steckkontakten des Signalleitungsanschlusses des Signalleitungssystems ausgeschlossen.

Bei der Erfindung ist vorgesehen, dass die Signalleitungsbahnen des Signalleitungssystems einerseits und die Zellverbinder und/oder Zellanschlüsse des Zellkontaktierungssystems andererseits sich hinsichtlich ihres Materials und/oder hinsichtlich ihrer Materialstärke voneinander unterscheiden.

So ist vorzugsweise vorgesehen, dass die Signalleitungsbahnen aus einem Ausgangsmaterial gebildet sind, welches Kupfer enthält. Dieses Ausgangsmaterial kann insbesondere Kupfer oder eine Kupferlegierung sein. Ein solches Material weist eine hohe Festigkeit und Korrosionsbeständigkeit auf.

Hingegen ist vorzugsweise vorgesehen, dass die Zellverbinder und/oder Zellanschlüsse des Zellkontaktierungssystems aus einem Ausgangsmaterial gebildet sind, welches Aluminium enthält. Vorzugsweise wird als Ausgangsmaterial für die Zellverbinder und/oder Zellanschlüsse Aluminium oder eine Aluminiumlegierung verwendet.

Da die von den Signalleitungsbahnen zu tragenden Signalströme in der Regel geringer sind als die von dem Stromleitungssystem zu tragenden Leistungsströme, ist vorzugsweise vorgesehen, dass die Materialstärke der Signalleitungsbahnen des Signalleitungssystems geringer ist als die Materialstärke der Zellverbinder und/oder die Materialstärke der Zellanschlüsse des Zellkontaktierungssystems.

Das Ausgangsmaterial für die Zellverbinder und/oder die Zellanschlüsse des Zellkontaktierungssystems stimmt vorzugsweise im Wesentlichen mit einem Material überein, aus welchem Zellterminals von elektrochemischen Zellen der elektrochemischen Vorrichtung gebildet sind.

Die elektrische Kontaktierung zwischen den Zellverbindern und/oder Zellanschlüssen des Zellkontaktierungssystems einerseits und den Zellterminals der elektrochemischen Zellen der elektrochemischen Vorrichtung andererseits erfolgt vorzugsweise stoffschlüssig, insbesondere durch Verschweißung, beispielsweise durch Laserschweißung.

Alternativ hierzu kann die Verbindung zwischen den Zellverbindern oder Zellanschlüssen des Zellkontaktierungssystems einerseits und den Zellterminals der elektrochemischen Zellen andererseits auch formschlüssig, beispielsweise durch Verschraubung, erfolgen.

Für die Herstellung des Stromleitungssystems wird ein Stromleiterverbund verwendet.

Hierzu umfasst das erfindungsgemäße Verfahren Folgendes:
- Heraustrennen eines Stromleiterverbundes, der mindestens zwei Zellverbinder zum elektrisch leitenden Verbinden jeweils zweiter Zellterminals verschiedener elektrochemischer Zellen der elektrochemischen Vorrichtung und mindestens ein Verbindungselement, durch welches mindestens zwei der Zellverbinder miteinander verbunden sind, umfasst, aus einem Ausgangsmaterial.

Der Stromleiterverbund, welcher mehrere Zellverbinder umfasst und zusätzlich auch einen oder mehrere Zellanschlüsse umfassen kann, wird somit als Einheit hergestellt und kann als Einheit an einem Trägerelement, insbesondere an einer Trägerplatte, des Zellkontaktierungssystems positioniert werden.

Das Heraustrennen des Stromleiterverbundes oder des Signalleitungsbahnenverbundes aus dem jeweiligen Ausgangsmaterial erfolgt durch Ausschneiden (beispielsweise Laserschneiden) oder Ausstanzen.

Ein durch Ausstanzen hergestellter Stromleiterverbund oder Signalleitungsbahnenverbund kann auch als Stanzgitter bezeichnet werden.

Aus Gründen einer Reduzierung des Materialverbrauchs kann vorgesehen sein, dass das Stromleitungssystem des Zellkontaktierungssystems aus mehreren separaten Stromleiterverbunden hergestellt wird.

Ebenso kann aus Gründen einer Reduzierung des Materialverbrauchs vorgesehen sein, dass ein Signalleitungssystem des Zellkontaktierungssystems aus mehreren separaten Signalleitungsbahnenverbunden hergestellt wird.

Ferner kann vorgesehen sein, dass das Zellkontaktierungssystem mehrere Signalleitungssysteme mit jeweils einem Signalleitungsanschluss umfasst, wobei jedes dieser Signalleitungssysteme jeweils aus einem einzigen Signalleitungsbahnenverbund oder aus mehreren Signalleitungsbahnenverbunden hergestellt sein kann.

Bei einer bevorzugten Ausgestaltung der Erfindung ist vorgesehen, dass der Signalleitungsbahnenverbund zusätzlich zu den Signalleitungsbahnen auch mindestens einen Anschlusspin oder Steckkontakt eines Signalleitungsanschlusses des Signalleitungssystems umfasst. Vorzugsweise ist mindestens ein Anschlusspin oder Steckkontakt einstückig mit mindestens einer Signalleitungsbahn des Signalleitungsbahnenverbundes ausgebildet.

Alternativ hierzu kann auch vorgesehen sein, dass der Signalleitungsbahnenverbund einerseits und die Anschlusspins oder Steckkontakte des Signalleitungsanschlusses andererseits separat hergestellt sind.

In diesem Fall kann insbesondere ein vorgefertigter Stecker als Signalleitungsanschluss verwendet werden, der nicht in den Signalleitungsbahnenverbund integrierte Anschlusspins aufweist.

Diese Anschlusspins können beispielsweise durch Umspritzen der Anschlusspins mit dem Material des Steckergehäuses in einem Spritzgießwerkzeug mit dem Steckergehäuse verbunden werden.

Die Anschlusspins des Steckergehäuses können auf einer Seite über das Steckergehäuse überstehen und mit den zugeordneten Signalleitungsbahnen einen Überlappungsbereich ausbilden, in welchem die Anschlusspins und die Signalleitungsbahnen stoffschlüssig, insbesondere durch Verschweißung, Verlötung oder Verpressung, beispielsweise durch Crimpen, miteinander verbunden werden.

Bei Verwendung eines Signalleitungsanschlusses mit eigenen, separat von dem Signalleitungsbahnenverbund hergestellten Anschlusspins können die Anforderungen an die Genauigkeit, die Ausdrückkräfte und die Oberflächenbeschaffenheit der Anschlusspins besonders einfach erfüllt werden.

Mindestens ein Anschlusspin oder Steckkontakt des Signalleitungsanschlusses wird vorzugsweise mit einem Steckgehäuse des Signalleitungsanschlusses verbunden.

Das Steckergehäuse kann ein- oder mehrteilig ausgebildet sein.

Ein oder mehrere Teile des Steckergehäuses können Bestandteil eines Trägerelements oder Bestandteil eines Abdeckelements des Zellkontaktierungssystems sein.

Die Verbindung zwischen dem Anschlusspin oder Steckkontakt einerseits und dem Steckergehäuse andererseits kann beispielsweise durch Verpressen oder durch Umspritzen des Anschlusspins oder Steckkontakts in einem Spritzgießwerkzeug hergestellt werden.

Die Anschlusspins oder Steckkontakte des Signalleitungsanschlusses sind vorzugsweise aus einem Material gebildet, welches Kupfer enthält. Dieses Material kann insbesondere Kupfer oder eine Kupferlegierung sein. Ein solches Material weist eine hohe Festigkeit und Korrosionsbeständigkeit auf.

Mindestens eine Signalleitungsbahn des Signalleitungsbahnenverbundes wird vorzugsweise mit mindestens einem Zellverbinder oder mit mindestens einem Zellanschluss des Zellkontaktierungssystems stoffschlüssig, insbesondere durch Schweißen, beispielsweise Ultraschallschweißen, Löten oder Kleben, oder formschlüssig, beispielsweise durch Crimpen, verbunden.

Ferner wird vorzugsweise mindestens eine Signalleitungsbahn des Signalleitungsbahnenverbundes mit einem Temperatursensor, welcher vorzugsweise ein NTC("Negative Temperature Coefficient")-Element umfasst, verbunden. Diese Verbindung erfolgt vorzugsweise stoffschlüssig, insbesondere durch Schweißen oder Löten.

Ferner kann vorgesehen sein, dass das Ausgangsmaterial für den Signalleitungsbahnenverbund und/oder das Ausgangsmaterial für den Stromleiterverbund zumindest partiell, vorzugsweise im Wesentlichen vollflächig, mit einer Beschichtung versehen ist.

Eine solche Beschichtung kann insbesondere nickelhaltig sein.

Durch eine solche Beschichtung kann die elektrische Kontaktierung zwischen dem Stromleitungssystem und dem Signalleitungssystem, die elektrische Kontaktierung zwischen dem Stromleitungssystem und den Zellterminals der elektrochemischen Zellen und/oder die elektrische Kontaktierung zwischen dem Signalleitungssystem und den Anschlusspins oder Steckkontakten des Signalleitungsanschlusses erleichtert werden.

Bei einer bevorzugten Ausgestaltung der Erfindung ist vorgesehen, dass der Signalleitungsbahnenverbund vor dem Verbinden der Signalleitungsbahnen mit jeweils einem Zellverbinder, einem Zellanschluss oder einem Sensorelement des Zellkontaktierungssystems an einem Trägerelement des Zellkontaktierungssystems, insbesondere an einer Trägerplatte, festgelegt wird.

Diese Festlegung kann beispielsweise durch Verstemmen erfolgen.

Vorzugsweise wird auch der Stromleiterverbund vor dem Verbinden mit den Signalleitungsbahnen des Signalleitungsbahnenverbundes an einem Trägerelement, insbesondere an einer Trägerplatte, des Zellkontaktierungssystems festgelegt, beispielsweise durch Verstemmen.

Das Trägerelement weist vorzugsweise mindestens eine Durchtrittsöffnung auf, welche einen Zugang zu einer Kontaktstelle zwischen dem Signalleitungsbahnenverbund einerseits und einem Zellverbinder, einem Zellanschluss und/oder einem Sensorelement des Zellkontaktierungssystems andererseits ermöglicht. Hierdurch ist es in einfacher Weise möglich, eine elektrische Kontaktierung zwischen dem Signalleitungssystem und dem Stromleitungssystem durch die Durchtrittsöffnung des Trägerelements hindurch durchzuführen.

Nach dem Verbinden der Zellverbinder und/oder Zellanschlüsse des Zellkontaktierungssystems mit den Signalleitungsbahnen des Signalleitungssystems werden die Zellverbinder und/oder Zellanschlüsse und die Signalleitungsbahnen vorzugsweise mittels eines Abdeckelements abgedeckt, um eine unerwünschte Berührung dieser Elemente des Zellkontaktierungssystems während der Montage der elektrochemischen Vorrichtung oder während des Transports und des Betriebs der elektrochemischen Vorrichtung zu vermeiden.

Die vorliegende Erfindung betrifft ferner ein Zellkontaktierungssystem für eine elektrochemische Vorrichtung, die mehrere elektrochemische Zellen umfasst, wobei das Zellkontaktierungssystem
mindestens einen Zellverbinder zum elektrisch leitenden Verbinden von Zellterminals verschiedener elektrochemischer Zellen der elektrochemischen Vorrichtung und
ein Signalleitungssystem mit mehreren Signalleitungsbahnen, die mit jeweils einem Zellverbinder, Zellanschluss oder Sensorelement des Zellkontaktierungssystems verbunden sind,
umfasst.

Der vorliegenden Erfindung liegt die weitere Aufgabe zugrunde, ein solches Zellkontaktierungssystem zu schaffen, welches möglichst einfach und dennoch zuverlässig und positionsgenau herstellbar ist.

Diese Aufgabe wird durch ein Zellkontaktierungssystem nach Anspruch 12 gelöst.

Besondere Ausgestaltungen des erfindungsgemäßen Zellkontaktierungssystems wurden bereits vorstehend im Zusammenhang mit besonderen Ausgestaltungen des erfindungsgemäßen Verfahrens zum Herstellen eines Zellkontaktierungssystems erläutert.

Das erfindungsgemäße Zellkontaktierungssystem eignet sich insbesondere zur Verbindung mit einer elektrochemischen Vorrichtung, die als ein Akkumulator, beispielsweise als ein Lithium-Ionen-Akkumulator, ausgebildet ist.

Wenn die elektrochemische Vorrichtung als ein Akkumulator ausgebildet ist, eignet sie sich insbesondere als eine hoch belastbare Energiequelle, beispielsweise für den Antrieb von Kraftfahrzeugen.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer elektrochemischen Vorrichtung mit einem Gehäuse und mehreren darin angeordneten elektrochemischen Zellen, wobei ein Zellkontaktierungssystem auf das Gehäuse aufgesetzt und mit Zellterminals der elektrochemischen Zellen elektrisch leitend verbunden ist;
- Fig. 2: eine schematische Draufsicht von oben auf die elektrochemische Vorrichtung mit dem Zellkontaktierungssystem aus Fig. 1;
- Fig. 3: eine schematische Vorderansicht der elektrochemischen Vorrichtung mit dem Zellkontaktierungssystem aus den Fig. 1 und 2, mit der Blickrichtung in Richtung des Pfeiles 3 in Fig. 2;
- Fig. 4: eine teilweise geschnittene ausschnittsweise Seitenansicht der elektrochemischen Vorrichtung mit dem Zellkontaktierungssystem aus den Fig. 1 bis 3, mit der Blickrichtung in Richtung des Pfeiles 4 in Fig. 3;
- Fig. 5: eine schematische Draufsicht von oben auf die elektrochemische Vorrichtung mit dem Zellkontaktierungssystem aus den Fig. 1 bis 4, wobei ein Abdeckelelement des Zellkontaktierungssystems abgenommen worden ist;
- Fig. 6: einen schematischen Längsschnitt durch das Zellkontaktierungssystem aus Fig. 5, längs der Linie 6 - 6 in Fig. 5;
- Fig. 7: eine schematische Draufsicht von oben auf ein Trägerelement des Zellkontaktierungssystems, bevor ein Stromleitungssystem und Signalleitungssysteme des Zellkontaktierungssystems mit dem Trägerelement verbunden worden sind;
- Fig. 8: eine schematische Draufsicht von oben auf einen Stromleiterverbund, welcher die Zellverbinder des Zellkontaktierungssystems und die Zellverbinder miteinander verbindende Verbindungselemente enthält;
- Fig. 9: eine schematische Draufsicht von oben auf das Trägerelement des Zellkontaktierungssystems, nachdem der Stromleiterverbund aus Fig. 8 auf das Trägerelement aufgesetzt worden ist;
- Fig. 10: eine schematische Draufsicht von oben auf das Trägerelement und die daran angeordneten Zellverbinder, nachdem die Verbindungselemente des Stromleiterverbunds entfernt worden sind;
- Fig. 11: eine Draufsicht von oben auf die Zellverbinder des Stromleitungssystems, nachdem die Verbindungselemente des Stromleiterverbundes entfernt worden sind;
- Fig. 12: eine schematische Draufsicht von oben auf zwei Signalleitungsbahnenverbunde, welche jeweils mehrere Signalleitungsbahnen und die Signalleitungsbahnen miteinander verbindende Verbindungselemente umfassen;
- Fig. 13: eine Draufsicht von oben auf das Trägerelement des Zellkontaktierungssystems mit den Zellverbindern und den auf das Trägerelement aufgesetzten Signalleitungsbahnenverbunden aus Fig. 12;
- Fig. 14: eine schematische Draufsicht von oben auf das Trägerelement mit den Zellverbindern und den Signalleitungssystemen, nachdem die Verbindungselemente der Signalleitungsbahnenverbunde entfernt worden sind;
- Fig. 15: eine schematische Draufsicht von oben auf die Signalleitungssysteme des Zellkontaktierungssystems, nachdem die Verbindungselemente der Signalleitungsbahnenverbunde entfernt worden sind;
- Fig. 16: eine schematische Draufsicht von oben auf das Trägerelement des Zellkontaktierungssystems mit dem Stromleitungssystem und den Signalleitungssystemen, nachdem Stromanschlüsse der elektrochemischen Vorrichtung mit Zellanschlüssen des Stromleitungssystems verbunden worden sind;
- Fig. 17: eine schematische perspektivische Darstellung des Gehäuses der elektrochemischen Vorrichtung mit den darin angeordneten elektrochemischen Zellen;
- Fig. 18: eine perspektivische Explosionsdarstellung einer zweiten Ausführungsform des Zellkontaktierungssystems, bei welcher nur ein einziges Signalleitungssystem vorhanden ist und der Signalleitungsanschluss des Signalleitungssystems Anschlusspins aufweist, die separat von dem Signalleitungsbahnenverbund hergestellt sind;
- Fig. 19: eine perspektivische Darstellung des Trägerelements, des Stromleitungssystems und des Signalleitungssystems des Zellkontaktierungssystems aus Fig. 18;
- Fig. 20: eine vergrößerte Darstellung des Bereichs I aus Fig. 19;
- Fig. 21: eine schematische Draufsicht von oben auf das Trägerelement, das Stromleitungssystem und das Signalleitungssystem des Zellkontaktierungssystems aus den Fig. 18 bis 20;
- Fig. 22: einen schematischen Schnitt durch das Zellkontaktierungssystem aus Fig. 21, längs der Linie 22 - 22 in Fig. 21;
- Fig. 23: eine vergrößerte Darstellung des Bereichs II aus Fig. 21;
- Fig. 24: eine Draufsicht von oben auf einen Signalleitungsbahnenverbund, welcher mehrere Signalleitungsbahnen und die Signalleitungsbahnen miteinander verbindende Verbindungselemente umfasst;
- Fig. 25: eine der Fig. 24 entsprechende Darstellung des Signalleitungsbahnenverbunds, in welcher die Verbindungselemente durch Schraffur hervorgehoben sind; und
- Fig. 26: eine Draufsicht von oben auf die Signalleitungsbahnen des Signalleitungsbahnenverbundes aus den Fig. 24 und 25, nachdem die Verbindungselemente in einem getrennt von dem Trägerelement des Zellkontaktierungssystems angeordneten Trennwerkzeug entfernt worden sind.

Gleiche oder funktional äquivalente Elemente sind in allen Figuren mit denselben Bezugszeichen bezeichnet.

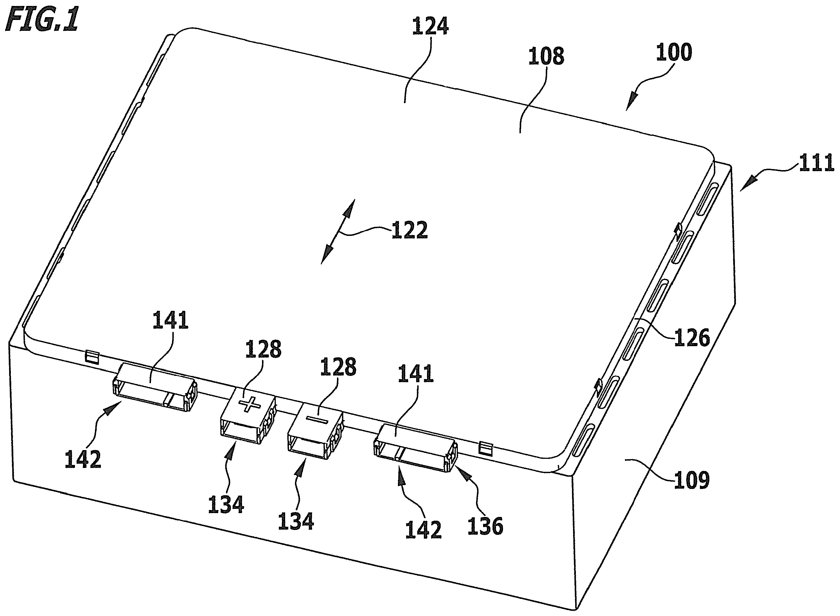

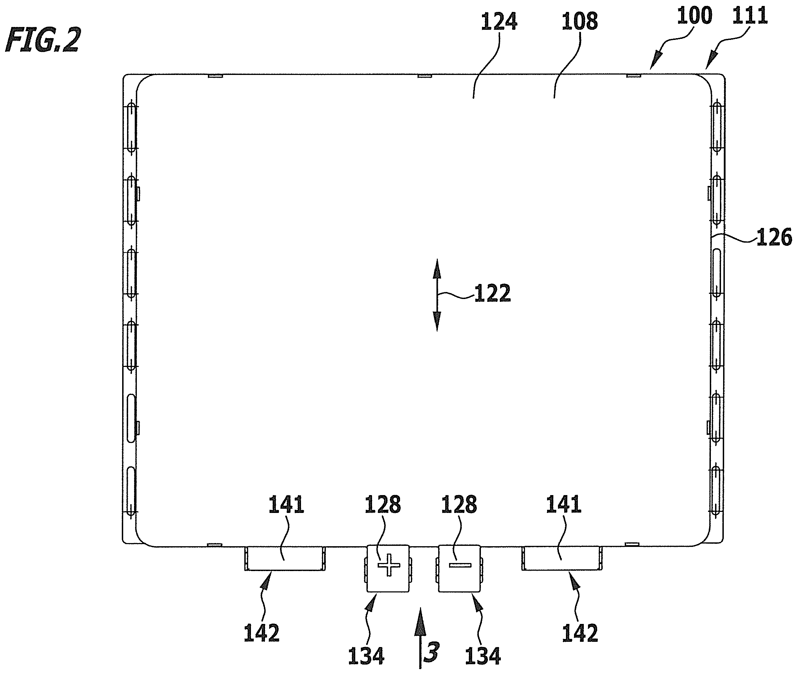

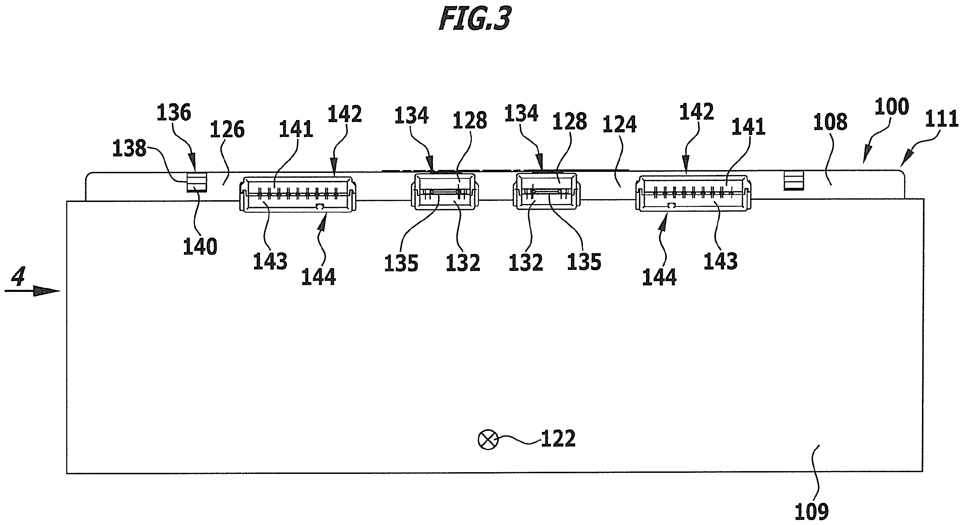

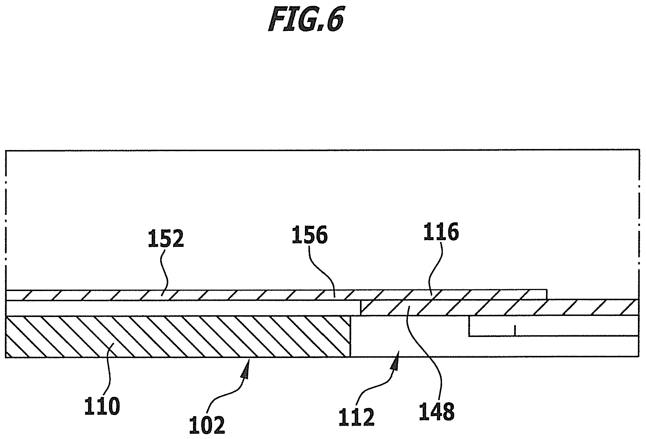

Ein in den Fig. 1 bis 6 dargestelltes, als Ganzes mit 100 bezeichnetes Zellkontaktierungssystem umfasst ein Trägerelement 102, an dem ein Stromleitungssystem 104 und ein oder mehrere Signalleitungssysteme 106 gehalten sind, und ein auf das Trägerelement 102 aufsetzbares Abdeckelement 108.

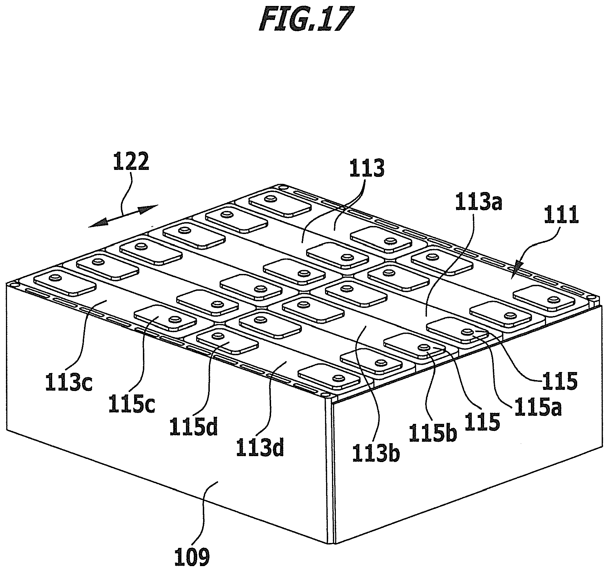

Das Trägerelement 102 ist auf ein Gehäuse 109 einer elektrochemischen Vorrichtung 111, beispielsweise eines Akkumulatormoduls, mit mehreren elektrochemischen Zellen 113, insbesondere Akkumulatorzellen, aufsetzbar und verschließt im montierten Zustand der elektrochemischen Vorrichtung 111 eine obere Gehäuseöffnung, durch welche Zellterminals 115 der elektrochemischen Zellen 113 der elektrochemischen Vorrichtung 111 hervorstehen (siehe Fig. 17).

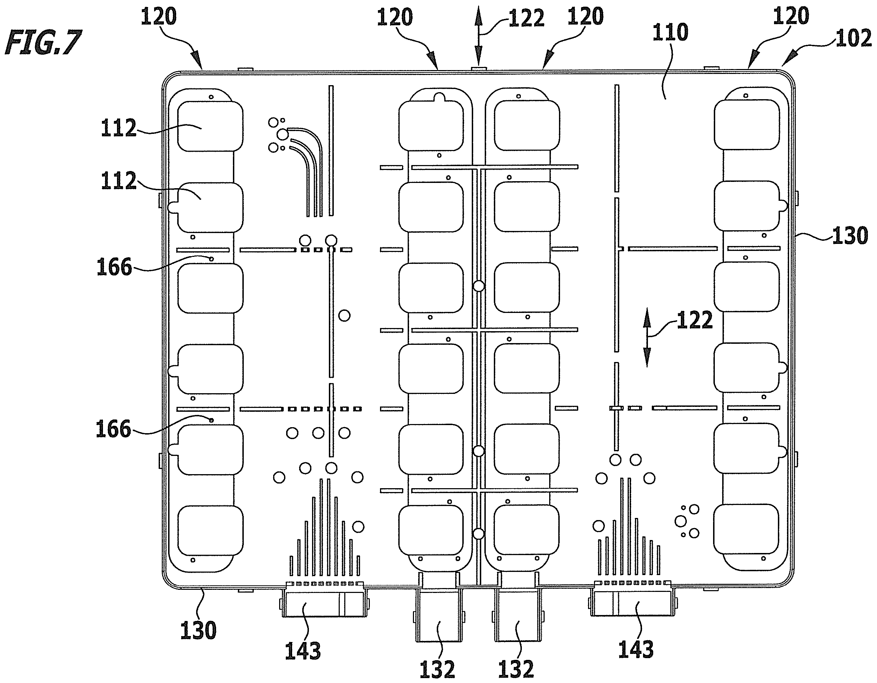

Das in Fig. 7 einzeln dargestellte Trägerelement 102 kann beispielsweise in Form einer vorzugsweise im Wesentlichen rechteckigen Trägerplatte 110 ausgebildet sein.

Das Trägerelement 102 ist mit einer Mehrzahl von Durchtrittsöffnungen 112 versehen, wobei jede Durchtrittsöffnung 112 einerseits jeweils einem Kontaktbereich 114 eines Zellverbinders 116 oder eines Zellanschlusses 118 und andererseits jeweils einem Zellterminal 115 der elektrochemischen Zellen 113 der elektrochemischen Vorrichtung 111 zugeordnet ist, so dass durch eine solche Durchtrittsöffnung 112 jeweils ein Zellterminal 115 mit einem zugeordneten Kontaktbereich 114 eines Zellverbinders 116 oder eines Zellanschlusses 118 verbindbar ist.

Dabei kann sich beispielsweise ein Zellterminal 115 durch die Durchtrittsöffnung 112 hindurch erstrecken, um in Kontakt mit einem Kontaktbereich 114 eines Zellverbinders 116 oder eines Zellanschlusses 118 zu kommen.

Alternativ hierzu kann sich auch ein Kontaktbereich 114 eines Zellverbinders 116 oder eines Zellanschlusses 118 durch die jeweils zugeordnete Durchtrittsöffnung 112 hindurch erstrecken, um in Kontakt mit dem jeweils zugeordneten Zellterminal 115 zu kommen.

Ferner ist auch denkbar, dass sich sowohl das Zellterminal 115 als auch der Kontaktbereich 114 des Zellverbinders 116 bzw. des Zellanschlusses 118 beide in die Durchtrittsöffnung 112 hinein erstrecken und dort miteinander verbunden sind.

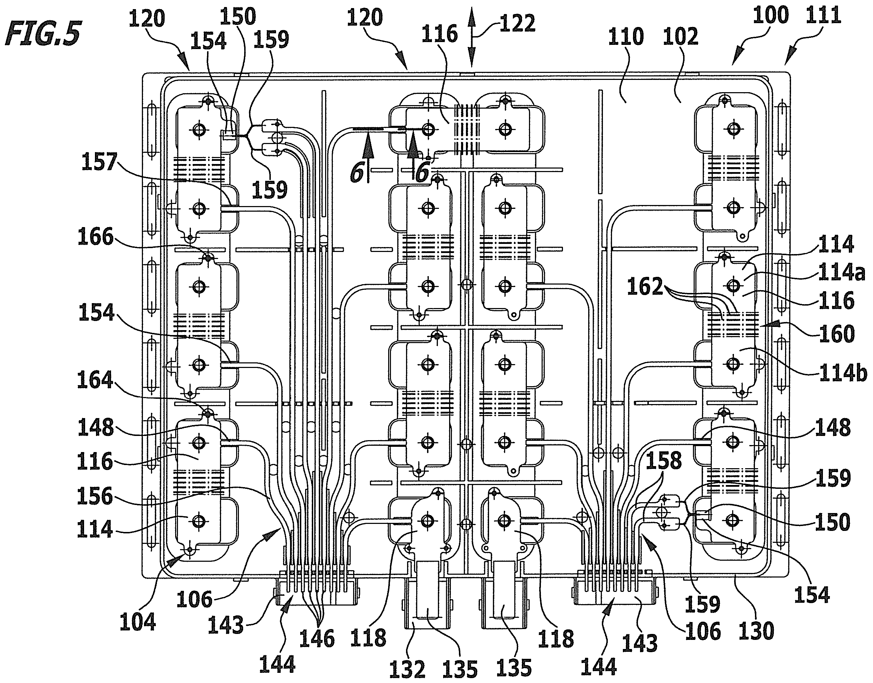

Wie aus den Fig. 5 und 7 zu ersehen ist, können die Durchtrittsöffnungen 112 des Trägerelements 102 in mehreren Reihen 120 angeordnet sein, wobei die Reihen 120 sich beispielsweise in einer Längsrichtung 122 des Trägerelements 102 erstrecken.

Die Durchtrittsöffnungen 112 können insbesondere im Wesentlichen rechteckig ausgebildet sein, insbesondere mit abgerundeten Eckbereichen; grundsätzlich sind aber auch andere Formen der Durchtrittsöffnungen 112, insbesondere kreisförmige, ovale, quadratische oder polygonale Durchtrittsöffnungen 112, möglich.

An der im montierten Zustand des Zellkontaktierungssystems 100 den elektrochemischen Zellen 113 abgewandten Oberseite des Trägerelements 102 ist das Abdeckelement 108 angeordnet, welches zum Abdecken des Stromleitungssystems 104 und des Signalleitungssystems 106 dient.

Das Abdeckelement 108 ist beispielsweise in Form einer im Wesentlichen rechteckigen Abdeckplatte 124 ausgebildet.

Das Abdeckelement 108 und/oder das Trägerelement 102 umfasst vorzugsweise ein thermoplastisches Material, beispielsweise Polypropylen.

Vorzugsweise ist das Abdeckelement 108 und/oder das Trägerelement 102 im Wesentlichen vollständig aus einem thermoplastischen Material, beispielsweise aus Polypropylen, gebildet.

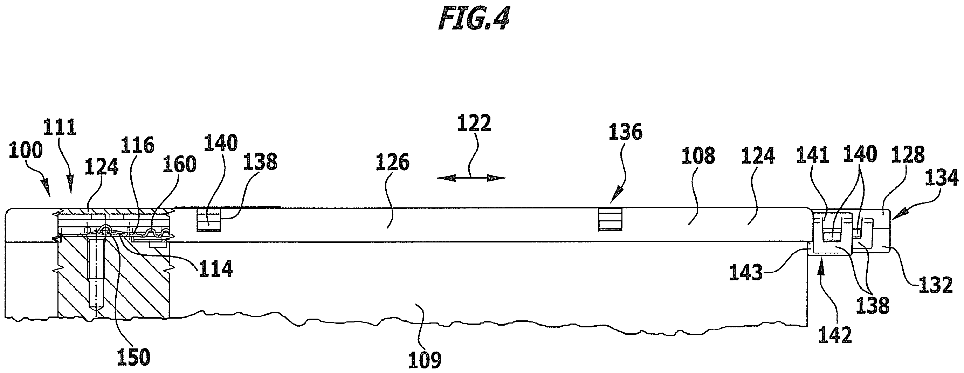

Wie am besten aus den Fig. 1 und 4 zu ersehen ist, ist das Abdeckelement 108 ferner vorzugsweise mit einem längs eines äußeren Randes umlaufenden, im montierten Zustand des Zellkontaktierungssystems 100 zu dem Trägerelement 102 hin vorstehenden Randbereich 126 versehen.

Der Randbereich 126 des Abdeckelements 108 kann von zwei Durchtrittskanälen 128 unterbrochen sein, welche vom Rand des Abdeckelements 108, beispielsweise in der Längsrichtung 122 nach vorne oder nach hinten, vorstehen und beispielsweise einen im Wesentlichen U-förmigen Querschnitt aufweisen können.

Wie am besten aus Fig. 7 zu ersehen ist, ist auch das Trägerelement 102 vorzugsweise mit einem längs eines äußeren Randes umlaufenden, im montierten Zustand des Zellkontaktierungssystems 100 zu dem Abdeckelement 108 hin vorstehenden Randbereich 130 versehen.

Auch der Randbereich 130 des Trägerelements 102 kann von zwei Durchtrittskanälen 132 unterbrochen sein, welche vom Rand des Trägerelements 102, vorzugsweise in der Längsrichtung 122 nach vorne oder nach hinten, vorstehen und beispielsweise einen im Wesentlichen U-förmigen Querschnitt aufweisen können.

Die Durchtrittskanäle 132 des Trägerelements 102 und die Durchtrittskanäle 128 des Abdeckelements 108 sind an einander entsprechenden Stellen der jeweiligen Randbereiche 130 bzw. 126 angeordnet und mit ihren offenen Seiten einander zugewandt, so dass die Durchtrittskanäle 132, 128 zusammen jeweils einen Durchtrittsschacht 134 bilden, welcher zur Aufnahme jeweils eines Stromanschlusses 135 des Zellkontaktierungssystems 100 dient.

Jeder Stromanschluss ist elektrisch leitend mit jeweils einem Zellanschluss 118 des Zellkontaktierungssystems 100 verbunden.

Die Zellanschlüsse 118 und die Zellverbinder 116, mittels welcher die Zellterminals 115 jeweils zweier einander benachbarter elektrochemischer Zellen 113 mit unterschiedlicher Polarität elektrisch leitend miteinander verbindbar sind, bilden zusammen das Stromleitungssystem 104 des Zellkontaktierungssystems 100.

Das Stromleitungssystem 104 dient dazu, einen Stromfluss zwischen den elektrochemischen Zellen 113 der elektrochemischen Vorrichtung 111 und zu den oder von den Zellanschlüssen 118 des Zellkontaktierungssystems 100 zu ermöglichen.

Durch dieses Stromleitungssystem 104 werden beispielsweise die elektrochemischen Zellen 113 der elektrochemischen Vorrichtung 111 elektrisch in Reihe geschaltet.

Dabei verbindet jeder Zellverbinder 116 ein erstes Zellterminal 115a negativer Polarität einer ersten elektrochemischen Zelle 113a mit einem zweiten Zellterminal 115b positiver Polarität einer benachbarten zweiten elektrochemischen Zelle 113b (siehe Fig. 17).

Jeweils ein Zellterminal 115c der den Anfang der Zellen-Reihenschaltung der elektrochemischen Vorrichtung bildenden elektrochemischen Zelle 113c und ein Zellterminal 115d der das Ende der Zellen-Reihenschaltung bildenden elektrochemischen Zelle 113d sind elektrisch leitend mit einem der elektrisch leitenden Zellanschlüsse 118 des Zellkontaktierungssystems 100 verbunden.

Mehrere elektrochemische Vorrichtungen 111 mit jeweils einem Zellkontaktierungssystem 100 sind vorzugsweise elektrisch in Reihe geschaltet.

Eine solche Reihenschaltung kann insbesondere dadurch hergestellt werden, dass ein Stromanschluss 135 einer ersten elektrochemischen Vorrichtung 111 mittels eines (nicht dargestellten) Modulverbinders elektrisch leitend mit einem elektrischen Stromanschluss 135 (entgegengesetzter Polarität) einer zweiten elektrochemischen Vorrichtung 111 verbunden wird.

Um das Abdeckelement 108 lösbar an dem Trägerelement 102 festlegen zu können, ist vorzugsweise eine Rastvorrichtung 136 vorgesehen, welche ein oder mehrere an dem Abdeckelement 108 vorgesehene Rastelemente 138 und ein oder mehrere an dem Trägerelement 102 vorgesehene Rastelemente 140 umfasst.

Die abdeckelementseitigen Rastelemente 138 und die trägerelementseitigen Rastelemente 140 sind an einander entsprechenden Stellen des Randbereichs 126 des Abdeckelements 108 bzw. des Randbereichs 130 des Trägerelements 102 angeordnet und verrasten miteinander, wenn das Abdeckelement 108 auf das Trägerelement 102 aufgesetzt wird, so dass das Abdeckelement 108 mittels der Rastvorrichtung 136 lösbar an dem Trägerelement 102 gehalten ist.

Ferner sind das Abdeckelement 108 und das Trägerelement 102 an ihren jeweiligen Randbereichen 126 bzw. 130 vorzugsweise mit einem oder mehreren Durchtrittskanälen 141 bzw. 143 versehen, welche paarweise jeweils einen Anschlussschacht 142 bilden, durch welchen jeweils ein Signalleitungsanschluss 144 (siehe insbesondere Fig. 5) mit mehreren Steckkontakten oder Anschlusspins 146 von außerhalb des Zellkontaktierungssystems 100 für die Kontaktierung mit einem zum Signalleitungsanschluss 144 komplementären Signalleitungselement zugänglich ist.

Der Signalleitungsanschluss 144 kann beispielsweise als ein Signalleitungsstecker ausgebildet sein.

In diesem Fall ist das komplementär zu dem Signalleitungsanschluss 144 ausgebildete Signalleitungselement vorzugsweise als eine Signalleitungsbuchse ausgebildet.

Jeder Signalleitungsanschluss 144 dient zum Anschließen des jeweils zugeordneten, an dem Trägerelement 102 angeordneten Signalleitungssystems 106 an eine (nicht dargestellte) Überwachungseinheit der elektrochemischen Vorrichtung 111 über eine (nicht dargestellte), vorzugsweise mehrpolige, Verbindungsleitung.

Jedes Signalleitungssystem 106 dient zum Verbinden von einer oder mehreren Spannungsabgriffstellen 148 an jeweils einem Zellverbinder 116 oder Zellanschluss 118 und/oder von einem oder mehreren Temperatursensoren 150 des Zellkontaktierungssystems 100 mit dem jeweiligen Signalleitungsanschluss 144.

Das Signalleitungssystem 106 umfasst mehrere Signalleitungsbahnen 152, welche jeweils eine Signalquelle 154 elektrisch leitend mit dem jeweils zugeordneten Signalleitungsanschluss 144 verbinden.

Wenn die Signalquelle 154 eine Spannungsabgriffstelle 148 an einem Zellverbinder 116 oder an einem Zellanschluss 118 ist, so ist diese Signalquelle 154 über eine Spannungsabgriffsleitungsbahn 156 mit dem Signalleitungsanschluss 144 verbunden.

Die Spannungsabgriffstellen 148 sind an jeweils einem Kontaktbereich 114 eines Zellverbinders 116 oder eines Zellanschlusses 122 des Zellkontaktierungssystems 100 angeschlossen, um das dort jeweils herrschende elektrische Potential abgreifen zu können.

Um in einfacher Weise eine stoffschlüssige Verbindung zwischen den Spannungsabgriffstellen 148 und den Spannungsabgriffsleitungsbahnen 156 herstellen zu können, sind die Spannungsabgriffstellen 148 vorzugsweise als Vorsprünge 157 an den Zellverbindern 116 oder an den Zellanschlüssen 118 ausgebildet, welche mit einem Endbereich einer Spannungsabgriffsleitungsbahn 156 überlappen.

Wenn die Signalquelle 154 ein Temperatursensor 150 ist, so ist die Signalquelle 154 mittels einer oder mehrerer Temperaturmessleitungsbahnen 158 elektrisch leitend mit dem Signalleitungsanschluss 144 verbunden.

Dabei kann der Temperatursensor 150 mit jeder der ihm zugeordneten Temperaturmessleitungsbahnen mittels jeweils einer Anschlussleitung 159 verbunden sein.

Die Temperatursensoren 150 stehen vorzugsweise ebenfalls in Kontakt mit einem Kontaktbereich 114 eines Zellverbinders 116 oder eines Zellanschlusses 118 des Zellkontaktierungssystems 100, um die dort herrschende Temperatur messen zu können.

Jeder der Kontaktbereiche 114 der Zellverbinder 116 und jeder Zellanschluss 118 ist jeweils einem Zellterminal 115 der elektrochemischen Vorrichtung 111 zugeordnet und im montierten Zustand der elektrochemischen Vorrichtung 111 elektrisch leitend, vorzugsweise stoffschlüssig, mit dem jeweils zugeordneten Zellterminal 115 verbunden.

Jeder Zellverbinder 116 umfasst zwei Kontaktbereiche 114 zum elektrischen Kontaktieren von jeweils einem Zellterminal 115 und einen die beiden Kontaktbereiche 114 miteinander verbindenden Kompensationsbereich 160. Der Kompensationsbereich 160 ist vorzugsweise elastisch und/oder plastisch verformbar, um eine Relativbewegung der beiden Kontaktbereiche 114 des Zellverbinders 116 relativ zueinander im Betrieb der elektrochemischen Vorrichtung 111 und/oder zum Toleranzausgleich bei der Montage des Zellkontaktierungssystems 100 zu ermöglichen.

Zu diesem Zweck kann der Kompensationsbereich 160 insbesondere eine oder mehrere quer zu einer Verbindungsrichtung, welche ein Zentrum des ersten Kontaktbereichs 114a und ein Zentrum des zweiten Kontaktbereichs 114b des Zellverbinders 116 miteinander verbindet, verlaufende Kompensationswellen 162 aufweisen.

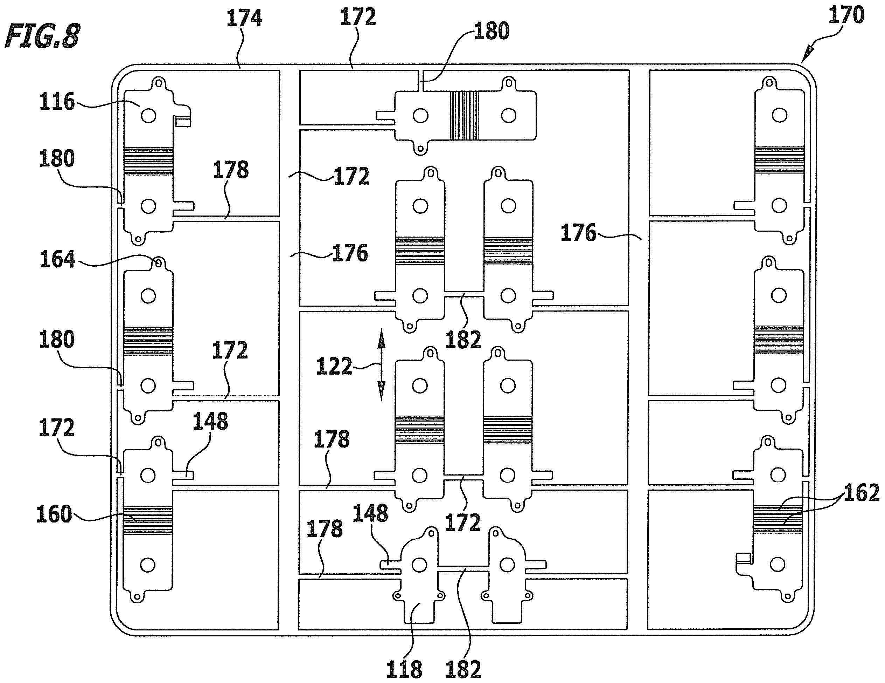

Jeder Kontaktbereich 114 eines Zellverbinders 116 oder eines Zellanschlusses 118 kann mittels jeweils eines Positionierungsloches 164 an einem jeweils zugeordneten Positionierungsstift 166 des Trägerelements 102 positioniert sein (siehe insbesondere die Fig. 7 und 8).

Dabei durchsetzt vorzugsweise der Positionierungsstift 166 des Trägerelements 102 das jeweils zugeordnete Positionierungsloch 164 des Zellverbinders 116 bzw. des Zellanschlusses 118.

Das Trägerelement 102 umfasst vorzugsweise ein elektrisch nicht leitendes Kunststoffmaterial, beispielsweise PBT (Polybutylenterephthalat), PP (Polypropylen), PA (Polyamid), ABS (Acrylnitril-Butadien-Styrol) und/oder LCP ("Liquid Crystal Polymer"), und ist vorzugsweise im Wesentlichen vollständig aus einem solchen Kunststoffmaterial gebildet.

Ein besonders geeignetes Material für das Trägerelement 102 ist ein mit Talkum verstärktes Polypropylen-Material (beispielsweise das Material mit der Bezeichnung PP TV20). Dieses Material weist durch die Talkumverstärkung eine besonders hohe Formstabilität auf.

Das vorstehend beschriebene Zellkontaktierungssystem 100 wird vorzugsweise als eine separate Baugruppe der elektrochemischen Vorrichtung komplett vormontiert.

Bei dieser Vormontage werden die Bestandteile des Stromleitungssystems 104, insbesondere die Zellverbinder 116 und die Zellanschlüsse 118, in Form eines Stromleiterverbundes 170 (siehe Fig. 8) als Einheit an dem Trägerelement 102 positioniert und mit demselben verbunden.

Hierfür wird der Stromleiterverbund 170, der einzeln in Fig. 8 dargestellt ist, aus einem Ausgangsmaterial, vorzugsweise aus einem metallischen Ausgangsmaterial, insbesondere aus einem Blechmaterial, herausgetrennt, beispielsweise ausgestanzt oder ausgeschnitten.

Der Stromleiterverbund 170 umfasst die Zellverbinder 116 und die Zellanschlüsse 118 des Zellkontaktierungssystems 100 in genau derselben Relativpositionierung, welche diese Bestandteile des Stromleitungssystems 104 im fertig montierten Zustand des Zellkontaktierungssystems 100 einnehmen.

In diesen Relativpositionen werden die Zellverbinder 116 und Zellanschlüsse 118 durch Verbindungselemente 172 gehalten, welche die Zellverbinder 116 und die Zellanschlüsse 118 miteinander verbinden und gemeinsam mit denselben aus dem Ausgangsmaterial herausgetrennt werden.

Wie aus Fig. 8 zu ersehen ist, können diese Verbindungselemente 172 insbesondere einen äußeren Verbindungsrahmen 174 umfassen, welcher die Zellverbinder 116 und die Zellanschlüsse 118 des Stromleiterverbundes 170 ringförmig umgibt.

Einander gegenüberliegende Seiten des äußeren Verbindungsrahmens 174 können durch Hauptverbindungsstege 176 miteinander verbunden sein, welche vorzugsweise parallel zur Längsrichtung 122 des Zellkontaktierungssystems 100 verlaufen.

Von diesen Hauptverbindungsstegen 176 führen Nebenverbindungsstege 178 zu den Zellverbindern 116 und den Zellanschlüssen 118 des Stromleiterverbundes 170.

Alternativ oder ergänzend hierzu können die Zellverbinder 116 und/oder die Zellanschlüsse 118 mittels äußerer Verbindungsstege 180 direkt mit dem äußeren Verbindungsrahmen 174 verbunden sein.

Ferner kann vorgesehen sein, dass Zellverbinder 116 und/oder Zellanschlüsse 118 des Stromleiterverbundes 170 durch Zwischenverbindungsstege 182 direkt miteinander verbunden sind.

Jeder Zellverbinder 116 und jeder Zellanschluss 118 des Stromleiterverbundes 170 ist über mindestens einen Verbindungssteg mit den übrigen Bestandteilen des Stromleiterverbundes 170 verbunden.

Die Stabilität des Stromleiterverbundes 170 wird erhöht und dessen Handhabung wird vereinfacht, wenn mindestens ein Zellverbinder 116 oder Zellanschluss 118, vorzugsweise alle Zellverbinder 116 und Zellanschlüsse 118, über jeweils mindestens zwei Verbindungsstege mit den übrigen Bestandteilen des Stromleiterverbundes 170 verbunden sind.

Als Ausgangsmaterial für die Herstellung des Stromleiterverbundes 170 kann grundsätzlich jedes Material verwendet werden, das eine ausreichende elektrische Leitfähigkeit aufweist, damit die daraus hergestellten Zellverbinder 116 und Zellanschlüsse 118 im Betrieb der elektrochemischen Vorrichtung 111 einen ausreichend großen Strom tragen können.

Vorzugsweise wird der Stromleiterverbund 170 aus einem aluminiumhaltigen Material, insbesondere aus Aluminium oder einer Aluminiumlegierung, hergestellt.

Der Stromleiterverbund 170 wird so an dem in Fig. 7 einzeln dargestellten Trägerelement 102 positioniert, dass die Positionierungsstifte 166 des Trägerelements 102 durch die Positionierungslöcher 164 des Stromleiterverbundes 170 hindurchtreten.

In dieser Stellung wird der Stromleiterverbund an dem Trägerelement 102 festgelegt, beispielsweise durch Verstemmen.

Vor dem Anordnen des Stromleiterverbundes 170 an dem Trägerelement 102 werden an den Zellverbindern 116 die Kompensationsbereiche 160 durch einen geeigneten Umformvorgang, beispielsweise durch einen Prägevorgang und/oder einen Tiefziehvorgang, erzeugt.

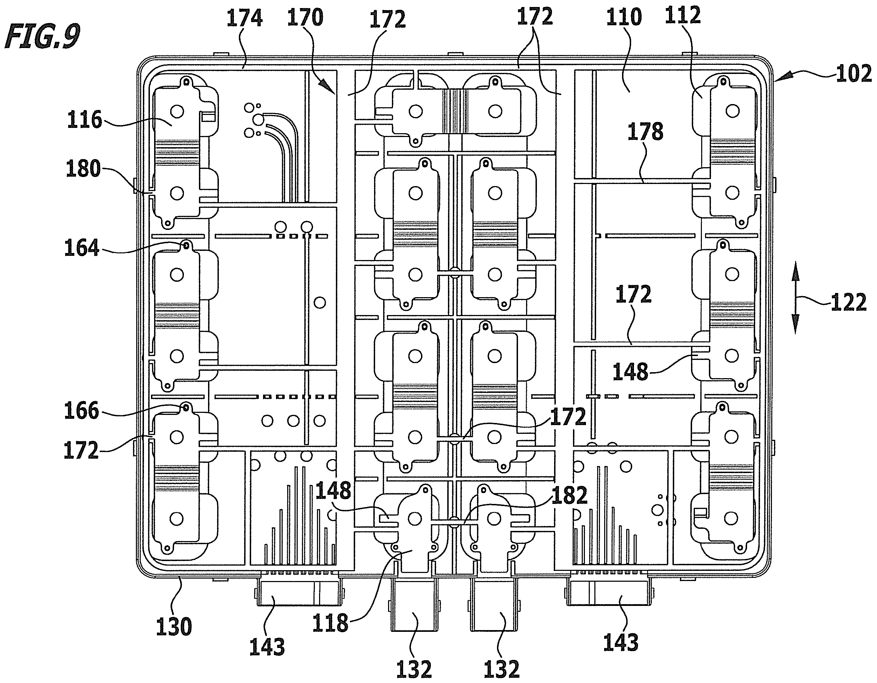

Damit ist der in Fig. 9 dargestellte Montage-Zwischenzustand erreicht.

Anschließend werden die Verbindungselemente 172 des Stromleiterverbundes 170, also beispielsweise der äußere Verbindungsrahmen 174, die Hauptverbindungsstege 176, die Nebenverbindungsstege 178, die äußeren Verbindungsstege 180 und die Zwischenverbindungsstege 182 von den Zellverbindern 116 und Zellanschlüssen 118 des Stromleitungssystems 104 abgetrennt, beispielsweise durch Ausstanzen, und von dem Zellkontaktierungssystem 100 entfernt.

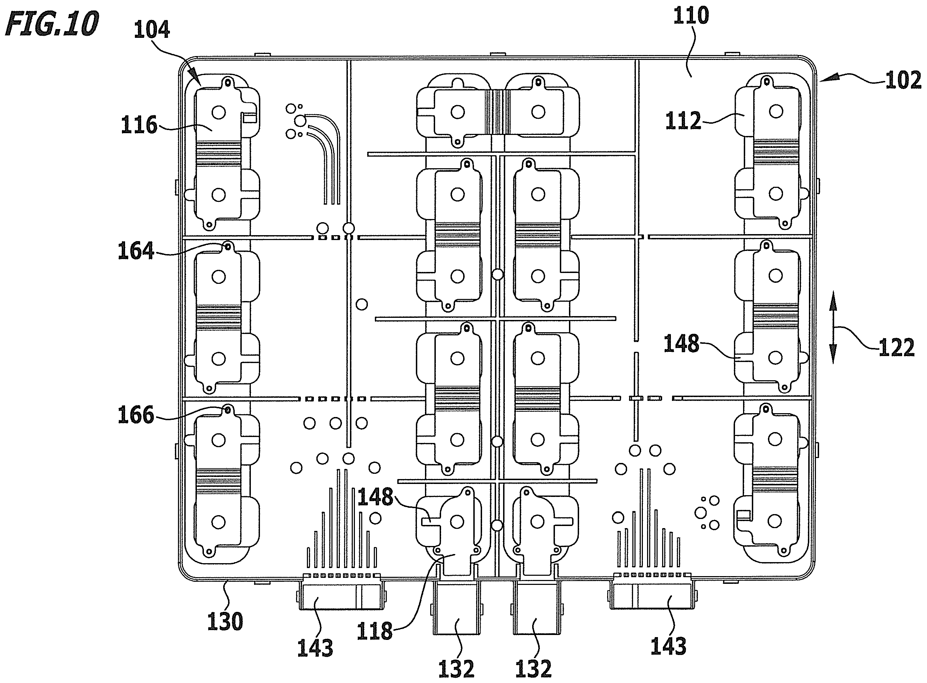

Damit ist der in Fig. 10 dargestellte Montage-Zwischenzustand erreicht.

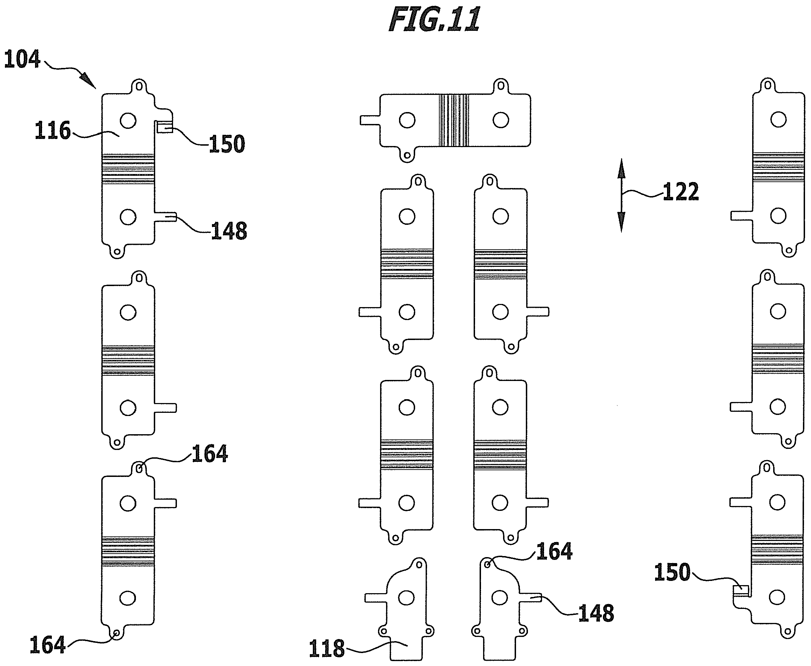

Die nach dem Entfernen der Verbindungselemente 172 des Stromleiterverbundes 170 im Stromleitungssystem 104 des Zellkontaktierungssystems 100 verbleibenden Zellverbinder 116 und Zellanschlüsse 118 sind einzeln, in ihrer korrekten Relativpositionierung innerhalb des Zellkontaktierungssystems 100, in Fig. 11 dargestellt.

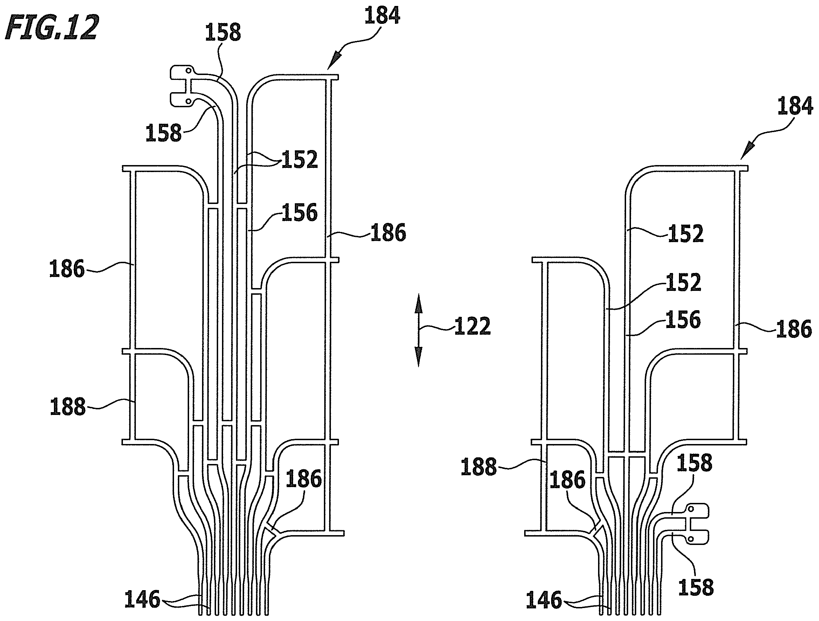

In einem weiteren Verfahrensschritt werden die Bestandteile der Signalleitungssysteme 106 des Zellkontaktierungssystems 100, insbesondere die Signalleitungsbahnen 152, in Form von einem oder mehreren Signalleitungsbahnenverbunden 184, die in Fig. 12 dargestellt sind, an dem Trägerelement 102 positioniert.

Bei dem zeichnerisch dargestellten Ausführungsbeispiel werden zwei Signalleitungssysteme 106 mit jeweils einem Signalleitungsanschluss 144 aus jeweils einem Signalleitungsbahnenverbund 184 gebildet.

Wie aus Fig. 12 zu ersehen ist, umfasst jeder Signalleitungsbahnenverbund 184 die Signalleitungsbahnen 152, insbesondere die Spannungsabgriffsleitungsbahnen 156 und die Temperaturmessleitungsbahnen 158, des jeweiligen Signalleitungssystems 106, sowie Verbindungselemente 186, welche jeweils zwei dieser Signalleitungsbahnen 152 miteinander verbinden, so dass insgesamt alle Signalleitungsbahnen 152 eines Signalleitungsbahnenverbundes 184 direkt oder indirekt über die Verbindungselemente 186 miteinander verbunden sind und eine gemeinsam handhabbare Einheit bilden.

Ferner ist jede Signalleitungsbahn 152 des Signalleitungsbahnenverbundes 184 einstückig mit einem Steckkontakt oder Anschlusspin 146 ausgebildet.

Vorzugsweise ist jede Signalleitungsbahn 152 eines Signalleitungsbahnenverbundes 184 über mindestens zwei Verbindungselemente 186, beispielsweise in Form von Verbindungsstegen 188, mit einer oder mehreren anderen Signalleitungsbahnen 152 des Signalleitungsbahnenverbundes 184 verbunden.

Die Signalleitungsbahnenverbunde 184 werden aus einem geeigneten Ausgangsmaterial, vorzugsweise aus einem metallischen Ausgangsmaterial, insbesondere aus einem blechförmigen Ausgangsmaterial, herausgetrennt, beispielsweise ausgestanzt oder ausgeschnitten.

Als Ausgangsmaterial kann grundsätzlich jedes Material verwendet werden, welches eine ausreichende elektrische Leitfähigkeit aufweist.

Vorzugsweise wird für den Signalleitungsbahnenverbund 184 ein kupferhaltiges Ausgangsmaterial, insbesondere Kupfer oder eine Kupferlegierung, verwendet.

Da die im Signalleitungssystem 106 fließenden Ströme geringer sind als die im Stromleitungssystem 104 fließenden Ströme, kann insbesondere auch die Materialstärke des Ausgangsmaterials des Signalleitungsbahnenverbundes 184 und damit die Materialstärke der Signalleitungsbahnen 152 des Signalleitungssystems 106 verschieden sein von der Materialstärke des Ausgangsmaterials des Stromleiterverbundes 170 und damit verschieden von der Materialstärke der Zellverbinder 116 und der Zellanschlüsse 118 des Stromleitungssystems 104.

Vorzugsweise ist die Materialstärke des Signalleitungsbahnenverbundes 184 geringer als die Materialstärke des Stromleiterverbundes 170.

Die Signalleitungsbahnen 152 des Signalleitungssystems 106 und die Zellverbinder 116 und/oder die Zellanschlüsse 118 des Zellkontaktierungssystems 100 können sich also insbesondere hinsichtlich ihres Materials und/oder ihrer Materialstärke voneinander unterscheiden.

Die aus dem Ausgangsmaterial herausgetrennten Signalleitungsbahnenverbunde 184 werden an dem Trägerelement 102 so positioniert, dass die Endbereiche der Spannungsabgriffsleitungsbahnen 156 mit den Spannungsabgriffstellen 148 der Zellverbinder 116 beziehungsweise der Zellanschlüsse 118 überlappen und die Endbereiche der Temperaturmessleitungsbahnen 158 mit den Endbereichen der Anschlussleitungen 159 der Temperatursensoren 150 überlappen.

In dieser Position werden die Signalleitungsbahnenverbunde 184 an dem Trägerelement 102 festgelegt, beispielsweise durch Verstemmung.

Anschließend werden die einander überlappenden Bereiche der Signalleitungsbahnenverbunde 184 einerseits und der Zellverbinder 116, der Zellanschlüsse 118 und der Anschlussleitungen 159 der Temperatursensoren 150 andererseits, vorzugsweise stoffschlüssig, miteinander verbunden, beispielsweise durch Ultraschallschweißung.

Um diese Verbindung zu ermöglichen, sind vorzugsweise im Trägerelement 102 diejenigen Bereiche, welche unterhalb der Überlappungsbereiche der Signalleitungsbahnenverbunde 184 mit den Zellverbindern 116, den Zellanschlüssen 118 und den Anschlussleitungen 159 der Temperatursensoren 150 liegen, ausgespart.

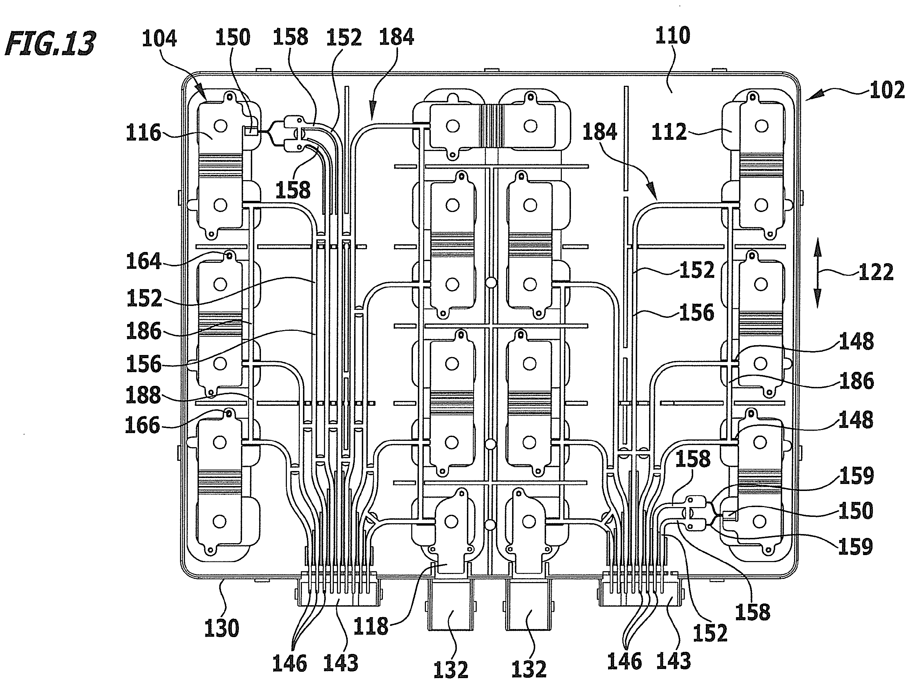

Damit ist der in Fig. 13 dargestellte Montage-Zwischenzustand erreicht.

In einem nächsten Verfahrensschritt werden die Verbindungsstege 188 der Signalleitungsbahnenverbunde 184 von den Signalleitungsbahnen 152 abgetrennt, beispielsweise durch Ausstanzen, und von dem Zellkontaktierungssystem 100 entfernt.

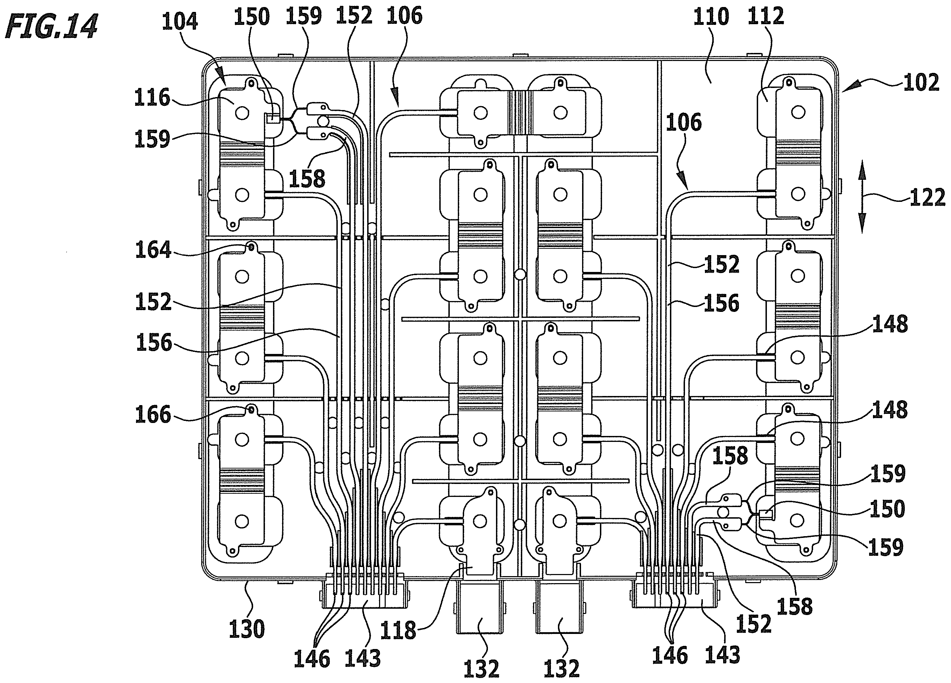

Damit ist der in Fig. 14 dargestellte Montage-Zwischenzustand erreicht.

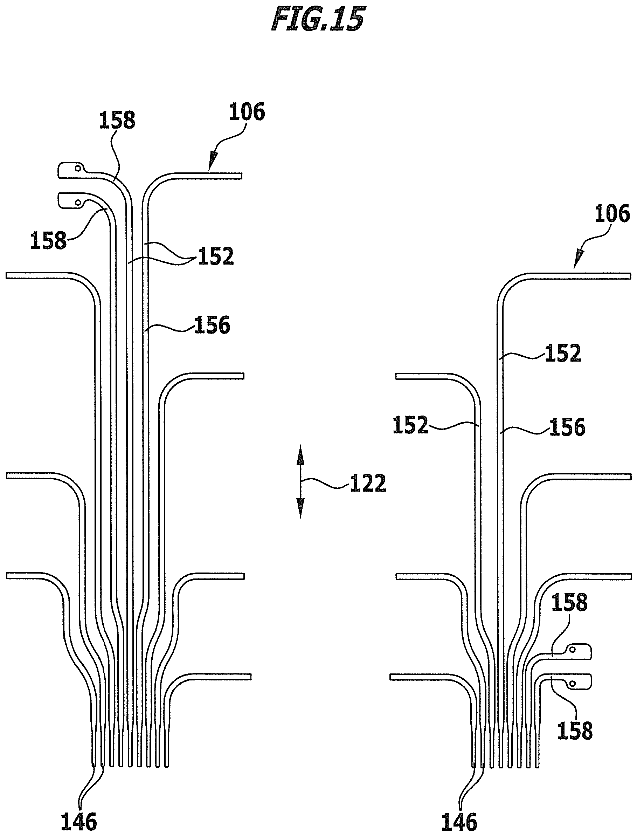

Die nach der Entfernung der Verbindungselemente 186 im Zellkontaktierungssystem 100 verbleibenden Signalleitungsbahnen 152 sind in Fig. 15 dargestellt.

In einem weiteren Verfahrensschritt werden die Stromanschlüsse 135, vorzugsweise stoffschlüssig, elektrisch leitend mit den Zellanschlüssen 118 des Zellkontaktierungssystems 100 verbunden.

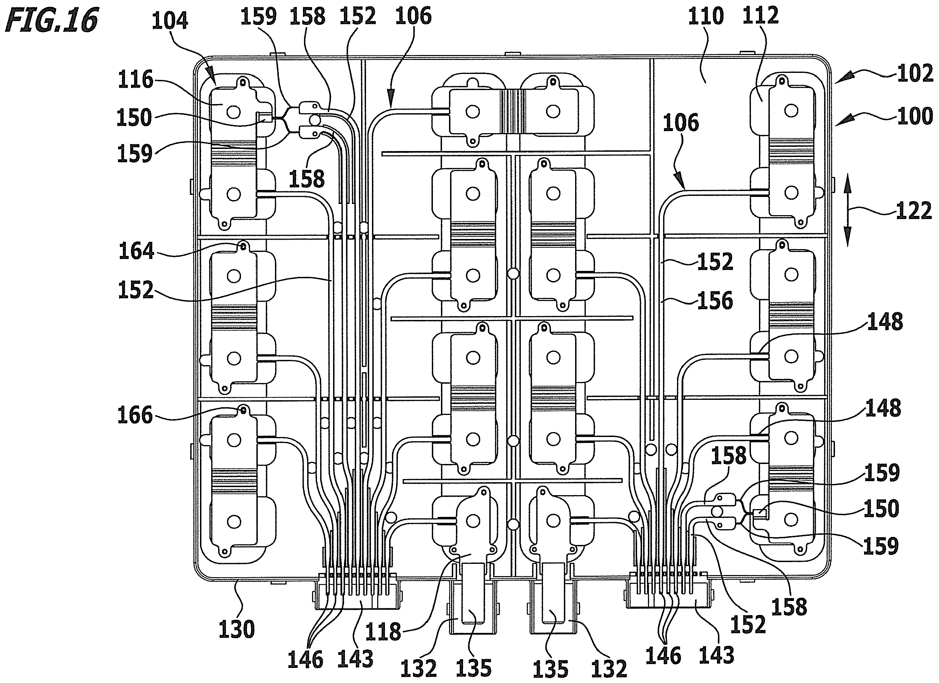

Damit ist der in Fig. 16 dargestellte Montage-Zwischenzustand des Zellkontaktierungssystems 100 erreicht.

In diesem Montage-Zwischenzustand sind alle für die Kontaktierung der elektrochemischen Zellen 113 der elektrochemischen Vorrichtung 111 benötigten Bauteile in einer als Einheit handhabbaren Baugruppe, nämlich in dem Zellkontaktierungssystem 100, bereits in der erforderlichen relativen Positionierung zusammengefasst.

Das Trägerelement 102 mit dem Stromleitungssystem 104 und mit den Signalleitungssystemen 106 wird bei der Montage der elektrochemischen Vorrichtung 111 auf das Gehäuse 109 aufgesetzt, in welchem die elektrochemischen Zellen 113 angeordnet sind, und mit dem die Gehäuseöffnung umgebenden Rand des Gehäuses 109 verbunden.

Anschließend werden die Zellverbinder 116 und die Zellanschlüsse 118 elektrisch leitend mit den jeweils zugeordneten Zellterminals 115 der elektrochemischen Vorrichtung 111 kontaktiert, beispielsweise durch Stoffschluss, insbesondere durch Verschweißung, und/oder durch Formschluss.

Nach erfolgter Kontaktierung zwischen dem Stromleitungssystem 104 und den Zellterminals 115 der elektrochemischen Zellen 113 der elektrochemischen Vorrichtung 111 wird das Abdeckelement 108 auf das Trägerelement 102 aufgesetzt und mit demselben verbunden, insbesondere durch Verrastung, so dass das Abdeckelement 108 das Stromleitungssystem 104 und die Signalleitungssysteme 106 des Zellkontaktierungssystems abdeckt und vor einer ungewollten Berührung schützt.

Hierdurch wird eine Beschädigung des Stromleitungssystems 104 und der Signalleitungssysteme 106 während des Transports und der Montage der elektrochemischen Vorrichtung 111 verhindert.

Die fertig montierte elektrochemische Vorrichtung 111 kann mit mehreren anderen elektrochemischen Vorrichtungen 111, insbesondere Akkumulatormodulen, zu einer elektrochemischen Vorrichtungsgruppe zusammengesetzt werden, wobei insbesondere verschiedene elektrochemische Vorrichtungen 111 mittels (nicht dargestellter) Modulverbinder, welche die Stromanschlüsse 135 verschiedener elektrochemischer Vorrichtungen 111 miteinander verbinden, zusammengeschaltet werden können.

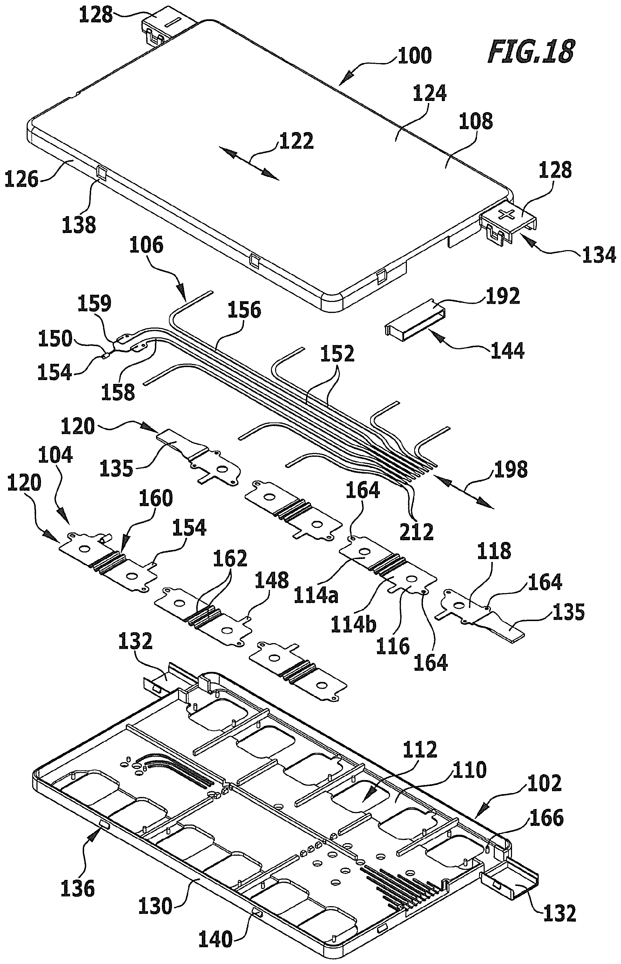

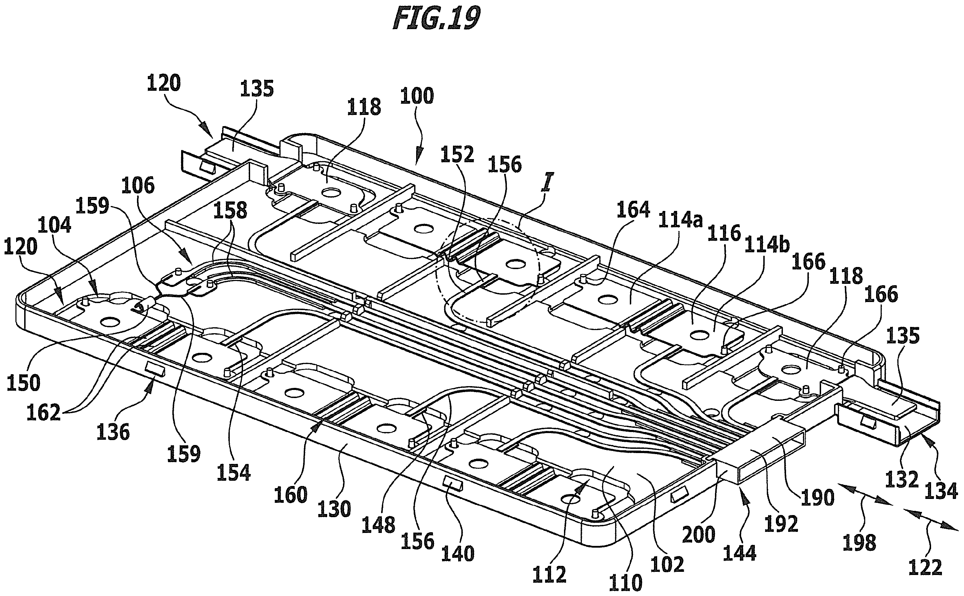

Eine in den Fig. 18 bis 26 dargestellte zweite Ausführungsform des Zellkontaktierungssystems 100 unterscheidet sich von der vorstehend beschriebenen ersten Ausführungsform insbesondere dadurch, dass bei der zweiten Ausführungsform nur zwei Reihen 120 von Zellverbindern 116 und Zellanschlüssen 118 vorhanden sind und deshalb ein einziges Signalleitungssystem 106 zur Verbindung der Signalquellen 154 des Zellkontaktierungssystems 100 mit einem einzigen Signalleitungsanschluss 144 des Zellkontaktierungssystems 100 ausreicht.

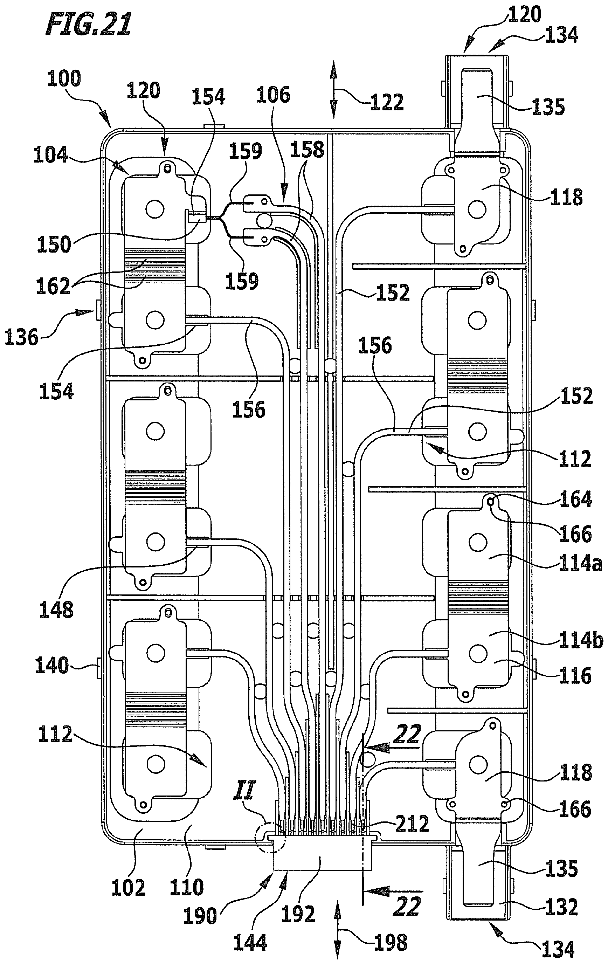

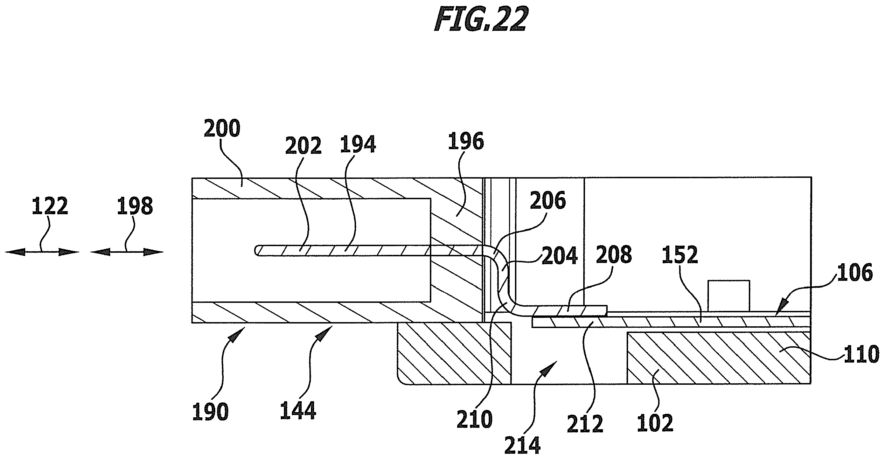

Ferner sind, wie am besten aus den Fig. 21 und 22 zu ersehen ist, bei dieser Ausführungsform die Anschlusspins des Signalleitungsanschlusses 144 nicht, wie bei der ersten Ausführungsform, einstückig mit Signalleitungsbahnen 152 des Signalleitungssystems 106 ausgebildet.

Vielmehr ist bei dieser zweiten Ausführungsform der Signalleitungsanschluss 144 als ein vorgefertigter Stecker 190 ausgebildet, welcher ein Steckergehäuse 192 und an dem Steckergehäuse 192 festgelegte Anschlusspins 194 umfasst.

Wie am besten aus Fig. 22 zu ersehen ist, umfasst das Steckergehäuse 192 eine Stirnwand 196, durch welche sich die Anschlusspins 194 hindurch erstrecken, und sich von der Stirnwand 196 längs einer Kontaktrichtung 198 weg erstreckende Seitenwände 200.

Die Kontaktrichtung 198 ist vorzugsweise im Wesentlichen parallel zur im montierten Zustand des Zellkontaktierungssystems 100 den Zellterminals 115 abgewandten Oberseite der Abdeckplatte 124 ausgerichtet und kann insbesondere im Wesentlichen parallel zur Längsrichtung 122 des Zellkontaktierungssystems 100 ausgerichtet sein.

Jeder Anschlusspin 194 des Signalleitungsanschlusses 144 umfasst vorzugsweise einen sich in der Kontaktrichtung 198 erstreckenden Kontaktabschnitt 202, der sich durch die Stirnwand 196 des Steckergehäuses 192 hindurch erstreckt, einen sich an ein außerhalb des Steckergehäuses 192 liegendes Ende des Kontaktabschnitts 202 anschließenden Mittelabschnitt 204, der über einen gekrümmten Abschnitt 206 mit dem Kontaktabschnitt 202 verbunden ist und sich quer, vorzugsweise im Wesentlichen senkrecht, zu der Kontaktrichtung 198 erstreckt, und einen sich an ein dem Kontaktabschnitt 202 abgewandtes Ende des Mittelabschnitts 204 anschließenden Anschlussabschnitt 208, der über einen gekrümmten Abschnitt 210 mit dem Mittelabschnitt 204 verbunden ist und sich vorzugsweise im Wesentlichen parallel zum Kontaktabschnitt 202 und zur Kontaktrichtung 198 und vorzugsweise im Wesentlichen parallel zur Längsrichtung 122 des Zellkontaktierungssystems erstreckt.

An dem Anschlussabschnitt 208 ist jeder Anschlusspin 194 elektrisch leitend mit einem dem Signalleitungsanschluss 144 zugewandten Endbereich 212 einer jeweils zugeordneten Signalleitungsbahn 152 des Signalleitungssystems 106 verbunden.

Vorzugsweise ist vorgesehen, dass der Anschlussabschnitt 208 stoffschlüssig, beispielsweise durch Verschweißen und/oder Verlöten und/oder Verpressen, insbesondere Crimpen, mit der jeweils zugeordneten Signalleitungsbahn 152 verbunden ist.

Um die Herstellung der Verbindung zwischen dem Kontaktabschnitt 202 und der jeweils zugeordneten Signalleitungsbahn 152 zu ermöglichen, sind in dem Trägerelement 102 benachbart zu den Anschlussabschnitten 208 der Anschlusspins 194 und zu den Endbereichen 212 der Signalleitungsbahnen 152 ein oder mehrere Durchtrittsöffnungen 214 vorgesehen, durch welche eine solche Verbindung, insbesondere eine stoffschlüssige Verbindung, herstellbar ist.

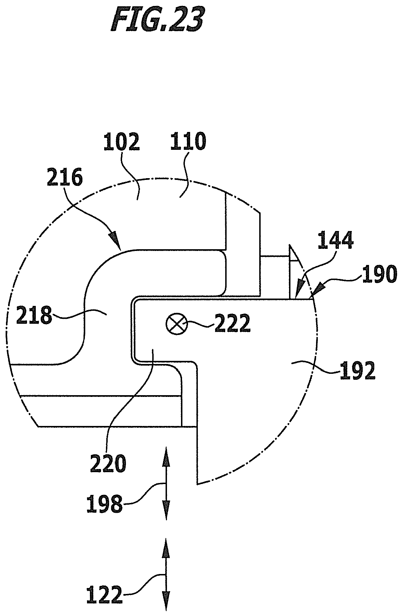

Wie am besten aus den Fig. 21 und 23 zu ersehen ist, ist zum Halten des Signalleitungsanschlusses 144 an dem Trägerelement 102 eine Halterung 216 vorgesehen, welche ein oder mehrere trägerelementseitige Halteelemente 218 und ein oder mehrere steckergehäuseseitige Halteelemente 220 umfasst.

Dabei wirken jeweils ein trägerelementseitiges Halteelement 218 und ein demselben zugeordnetes steckergehäuseseitiges Halteelement 220 so zusammen, dass das Steckergehäuse 192 bei der Montage des Zellkontaktierungssystems 100 in einer (vorzugsweise im Wesentlichen senkrecht zur Kontaktrichtung 198 verlaufenden) Einschubrichtung 222 in eine Montageposition an dem Trägerelement 102 einführbar ist und in der Montageposition gegen eine Verschiebung, insbesondere gegen eine Verschiebung längs der Kontaktrichtung 198, relativ zu dem Trägerelement 102 durch Formschluss gesichert ist.

Ergänzend hierzu kann auch vorgesehen sein, dass die Halterung 216 derart ausgebildet ist, dass Steckergehäuse 192 des Signalleitungsanschlusses 144 mit dem Trägerelement 102 verrastbar ist.

Die Anschlusspins 194 des Signalleitungsanschlusses 144 sind aus einem elektrisch gut leitfähigen Material, beispielsweise aus Kupfer oder einer Kupferlegierung, gebildet.

Das Steckergehäuse 192 ist aus einem elektrisch nicht leitenden Material, insbesondere aus einem Kunststoffmaterial, gebildet.

Vorzugsweise umfasst das Steckergehäuse 192 PBT (Polybutylenterephthalat), PP (Polypropylen), PA (Polyamid), ABS (Acrylnitril-Butadien-Styrol) und/oder LCP ("Liquid Crystal Polymer"), und ist vorzugsweise im Wesentlichen vollständig aus einem solchen Kunststoffmaterial gebildet.

Ein besonders geeignetes Material für das Steckergehäuse 192 ist ein talkumverstärktes Polypropylen-Material (beispielsweise das Material mit der Bezeichnung PP TV20). Dieses Material weist durch die Talkumverstärkung eine besonders hohe Formstabilität auf.

Die zweite Ausführungsform des Zellkontaktierungssystems 100 wird vorzugsweise als eine separate Baugruppe der elektrochemischen Vorrichtung komplett vormontiert.

Dabei erfolgt die Montage des Stromleitungssystems 104 an dem Trägerelement 102 vorzugsweise in derselben Weise, wie dies in Bezug auf die erste Ausführungsform des Zellkontaktierungssystems 100 vorstehend unter Bezugnahme auf die Fig. 8 bis 11 beschrieben worden ist.

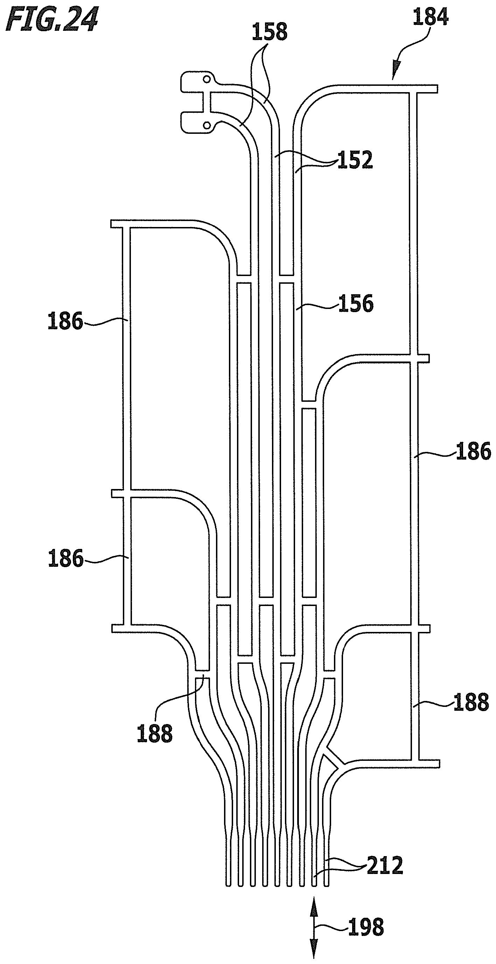

Das Signalleitungssystem 106 wird aus einem in Fig. 24 dargestellten Signalleitungsbahnenverbund 184 gebildet.

Ebenso wie bei der ersten Ausführungsform umfasst der Signalleitungsbahnenverbund 184 die Signalleitungsbahnen 152, insbesondere die Spannungsabgriffsleitungsbahnen 156 und die Temperaturmessleitungsbahnen 158 des Signalleitungssystems 106, sowie Verbindungselemente 186, welche jeweils mindestens zwei dieser Signalleitungsbahnen 152 miteinander verbinden, so dass insgesamt alle Signalleitungsbahnen 152 des Signalleitungsbahnenverbundes 184 direkt oder indirekt über die Verbindungselemente 186 miteinander verbunden sind und eine gemeinsam handhabbare Einheit bilden.

Ferner ist jede Signalleitungsbahn 152 des Signalleitungsbahnenverbundes 184 einstückig mit jeweils einem Endbereich 212 zum Verbinden mit einem Anschlusspin 194 des Signalleitungsanschlusses 144 ausgebildet.

Vorzugsweise ist jede Signalleitungsbahn 152 des Signalleitungsbahnenverbundes 184 über mindestens zwei Verbindungselemente 186, beispielsweise in Form von Verbindungsstegen 188, mit einer oder mehreren anderen Signalleitungsbahnen 152 des Signalleitungsbahnenverbundes 184 verbunden.

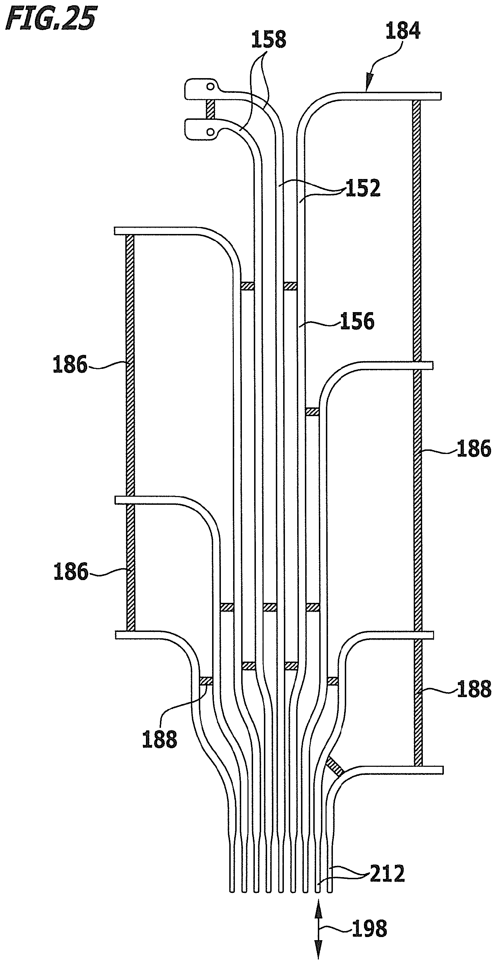

Die Verbindungselemente 186 des Signalleitungsbahnenverbundes 184 sind in Fig. 25 durch Schraffur hervorgehoben und somit besonders leicht von den Signalleitungsbahnen 152 unterscheidbar.

Der Signalleitungsbahnenverbund 184 wird aus einem geeigneten Ausgangsmaterial, vorzugsweise aus einem metallischen Ausgangsmaterial, insbesondere aus einem blechförmigen Ausgangsmaterial, herausgetrennt, beispielsweise ausgestanzt oder ausgeschnitten.

Als Ausgangsmaterial kann grundsätzlich jedes Material verwendet werden, welches eine ausreichende elektrische Leitfähigkeit aufweist.

Vorzugsweise wird für den Signalleitungsbahnenverbund 184 ein kupferhaltiges Ausgangsmaterial, insbesondere Kupfer oder eine Kupferlegierung, verwendet.

Besonders günstig ist es, wenn für den Signalleitungsbahnenverbund 184 im Wesentlichen dasselbe Material verwendet wird wie für die Anschlusspins 194 des Signalleitungsanschlusses 144.

Da die im Signalleitungssystem 106 fließenden Ströme geringer sind als die im Stromleitungssystem 104 fließenden Ströme, kann insbesondere auch die Materialstärke des Ausgangsmaterials des Signalleitungsbahnenverbundes 184 und damit die Materialstärke der Signalleitungsbahnen 152 des Signalleitungssystems 106 verschieden sein von der Materialstärke des Ausgangsmaterials des Stromleiterverbundes 170 und damit verschieden von der Materialstärke der Zellverbinder 116 und der Zellanschlüsse 118 des Stromleitungssystems 104.

Vorzugsweise ist die Materialstärke des Signalleitungsbahnenverbundes 184 geringer als die Materialstärke des Stromleiterverbundes 170.

Die Signalleitungsbahnen 152 des Signalleitungssystems 106 und die Zellverbinder 116 und/oder die Zellanschlüsse 118 des Zellkontaktierungssystems 100 können sich also insbesondere hinsichtlich ihres Materials und/oder ihrer Materialstärke voneinander unterscheiden.

Der aus dem Ausgangsmaterial herausgetrennte Signalleitungsbahnenverbund 184 wird in einem (nicht dargestellten) Trennwerkzeug positioniert.

Das Trennwerkzeug ist von dem Werkzeug, mittels welchem der Signalleitungsbahnenverbund 184 aus dem Ausgangsmaterial herausgetrennt worden ist, verschieden und vorzugsweise in der Nähe der Stelle angeordnet, an welcher das Trägerelement 102 für die Montage des Zellkontaktierungssystems 100 bereitgestellt wird.

In einem nächsten Verfahrensschritt werden die Verbindungselemente 186, insbesondere die Verbindungsstege 188, des Signalleitungsbahnenverbundes 184 mittels des Trennwerkzeugs von den Signalleitungsbahnen 152 abgetrennt, beispielsweise durch Ausstanzen.

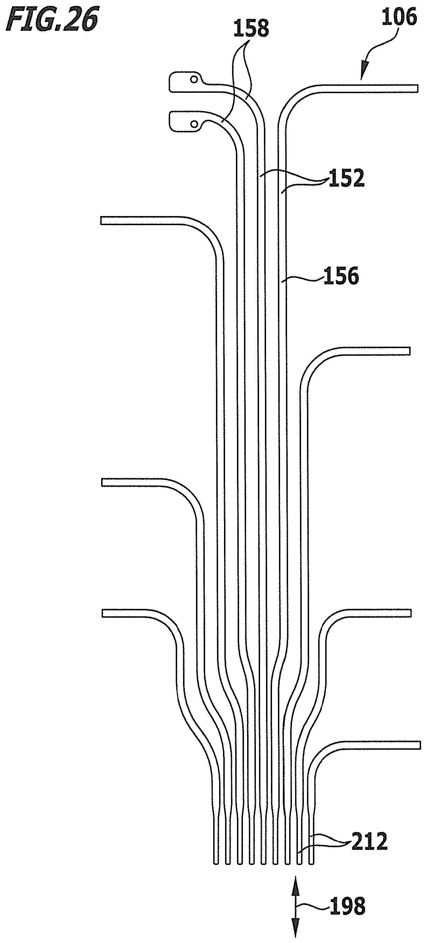

Die von den Verbindungselementen 186 abgetrennten Signalleitungsbahnen 152,welche nunmehr unabhängig voneinander beweglich in dem Trennwerkzeug angeordnet sind, sind in Fig. 26 dargestellt.

Von dem Trennwerkzeug werden die Signalleitungsbahnen 152 nun jeweils separat, im Wesentlichen gleichzeitig oder nacheinander, von dem Trennwerkzeug zu dem Trägerelement 102 transportiert.

Dieser Transport kann beispielsweise von einer Montageperson von Hand durchgeführt werden oder aber mittels einer automatisch operierenden Handhabungsvorrichtung, insbesondere einer Greifvorrichtung.

Die vereinzelten Signalleitungsbahnen 152 werden an dem Trägerelement 102 so positioniert, dass Endbereiche der Spannungsabgriffsleitungsbahnen 156 mit den Spannungsabgriffstellen 148 der Zellverbinder 116 beziehungsweise der Zellanschlüsse 118 überlappen und Endbereiche der Temperaturmessleitungsbahnen 158 mit den Endbereichen der Anschlussleitungen 159 der Temperatursensoren 150 überlappen, wie dies vorstehend im Zusammenhang mit der Montage der ersten Ausführungsform des Zellkontaktierungssystems 100 beschrieben worden ist.

In dieser Position werden die Signalleitungsbahnen 152 an dem Trägerelement 102 festgelegt, beispielsweise durch Verstemmung.

Anschließend werden die einander überlappenden Bereiche der Signalleitungsbahnen 152 einerseits und der Zellverbinder 116, der Zellanschlüsse 118 und der Anschlussleitungen 159 der Temperatursensoren 150 andererseits, vorzugsweise stoffschlüssig, miteinander verbunden, beispielsweise durch Ultraschallschweißung.

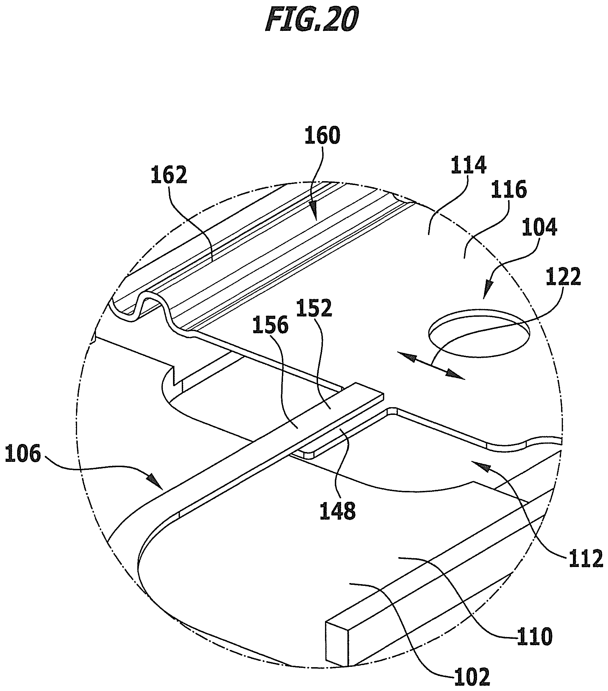

Um diese Verbindung zu ermöglichen, sind vorzugsweise im Trägerelement 102 diejenigen Bereiche, welche unterhalb der Überlappungsbereiche der Signalleitungsbahnen 152 mit den Zellverbindern 116, den Zellanschlüssen 118 und den Anschlussleitungen 159 der Temperatursensoren 150 liegen, ausgespart (siehe insbesondere Fig. 20).

Die Stromanschlüsse 135 können einstückig mit den Zellanschlüssen 118 ausgebildet sein, so dass es in diesem Fall nicht mehr erforderlich ist, die Stromanschlüsse 135, vorzugsweise stoffschlüssig, elektrisch leitend mit den Zellanschlüssen 118 des Zellkontaktierungssystems 100 zu verbinden.

Nun sind alle für die Kontaktierung der elektrochemischen Zellen 113 der elektrochemischen Vorrichtung 111 benötigten Bauteile in einer als Einheit handhabbaren Baugruppe, nämlich in dem Zellkontaktierungssystem 100, bereits in der erforderlichen relativen Positionierung zusammengefasst.

Das Trägerelement 102 mit dem Stromleitungssystem 104 und mit dem Signalleitungssystem 106 wird bei der Montage der elektrochemischen Vorrichtung 111 auf das Gehäuse 109 aufgesetzt, in welchem die elektrochemischen Zellen 113 angeordnet sind, und mit dem die Gehäuseöffnung umgebenden Rand des Gehäuses 109 verbunden.

Anschließend werden die Zellverbinder 116 und die Zellanschlüsse 118 elektrisch leitend mit den jeweils zugeordneten Zellterminals 115 der elektrochemischen Vorrichtung 111 kontaktiert, beispielsweise durch Stoffschluss, insbesondere durch Verschweißung, und/oder durch Formschluss.

Nach erfolgter Kontaktierung zwischen dem Stromleitungssystem 104 und den Zellterminals 115 der elektrochemischen Zellen 113 der elektrochemischen Vorrichtung 111 wird das Abdeckelement 108 auf das Trägerelement 102 aufgesetzt und mit demselben verbunden, insbesondere durch Verrastung, so dass das Abdeckelement 108 das Stromleitungssystem 104 und das Signalleitungssystem 106 des Zellkontaktierungssystems 100 abdeckt und vor einer ungewollten Berührung schützt.

Hierdurch wird eine Beschädigung des Stromleitungssystems 104 und des Signalleitungssystems 106 während des Transports und der Montage der elektrochemischen Vorrichtung 111 verhindert.

Im Übrigen stimmt die in den Fig. 18 bis 26 dargestellte zweite Ausführungsform des Zellkontaktierungssystems 100 hinsichtlich Aufbau, Funktion und Herstellungsweise mit der in den Fig. 1 bis 17 dargestellten ersten Ausführungsform überein, auf deren vorstehende Beschreibung insoweit Bezug genommen wird.

## Patentansprüche

1. Verfahren zum Herstellen eines Zellkontaktierungssystems (100) für eine elektrochemische Vorrichtung (111), umfassend Folgendes:
- Heraustrennen durch Ausschneiden oder Ausstanzen mindestens eines elektrisch leitenden Signalleitungsbahnenverbundes (184) aus einem metallischen Ausgangsmaterial,
wobei der Signalleitungsbahnenverbund (184) mindestens zwei Signalleitungsbahnen (152) eines Signalleitungssystems (106) des Zellkontaktierungssystems (100)
und mindestens ein Verbindungselement (186), durch welches mindestens zwei der Signalleitungsbahnen (152) miteinander verbunden sind, umfasst und
wobei durch das Signalleitungssystem (106) Signalquellen (154) oder Messstellen der elektrochemischen Vorrichtung (111) elektrisch leitend mit einem Signalleitungsanschluss (144), der als Schnittstelle zu einer Überwachungseinheit der elektrochemischen Vorrichtung (111) dient, verbunden sind;
- Heraustrennen durch Ausschneiden oder Ausstanzen eines Stromleiterverbundes (170), der mindestens zwei Zellverbinder (116) oder Zellanschlüsse (118) und mindestens ein Verbindungselement (172), durch welches mindestens zwei der Zellverbinder (116) oder Zellanschlüsse (118) miteinander verbunden sind, umfasst, aus einem Ausgangsmaterial;
- stoffschlüssiges oder formschlüssiges Verbinden der Signalleitungsbahnen (152) des Signalleitungsbahnenverbundes (184) mit jeweils einem Zellverbinder (116), Zellanschluss (118) oder Sensorelement des Zellkontaktierungssystems (100) nach dem Heraustrennen des Signalleitungsbahnenverbundes (184) aus dem Ausgangsmaterial;
- Entfernen des mindestens einen Verbindungselements (186);
wobei die Signalleitungsbahnen (152) und die Zellverbinder (116) und/oder die Zellanschlüsse (118) des Zellkontaktierungssystems (100) sich hinsichtlich ihres Materials und/oder hinsichtlich ihrer Materialstärke voneinander unterscheiden.

2. Verfahren nach Anspruch 1, **dadurch gekennzeichnet, dass** die Signalleitungsbahnen (152) aus einem Ausgangsmaterial gebildet sind, welches Kupfer enthält.

3. Verfahren nach einem der Ansprüche 1 oder 2, **dadurch gekennzeichnet, dass** die Zellverbinder (116) und/oder die Zellanschlüsse (118) des Zellkontaktierungssystems (100) aus einem Ausgangsmaterial gebildet sind, welches Aluminium enthält.

4. Verfahren nach einem der Ansprüche 1 bis 3, **dadurch gekennzeichnet, dass** der Signalleitungsbahnenverbund (184) zusätzlich zu den Signalleitungsbahnen (152) mindestens einen Steckkontakt oder Anschlusspin (146) umfasst.

5. Verfahren nach Anspruch 4, **dadurch gekennzeichnet, dass** mindestens ein Steckkontakt oder Anschlusspin (146) einstückig mit mindestens einer Signalleitungsbahn (152) ausgebildet ist.

6. Verfahren nach einem der Ansprüche 4 oder 5, **dadurch gekennzeichnet, dass** mindestens ein Steckkontakt oder Anschlusspin (146) mit einem Steckergehäuse verbunden wird.

7. Verfahren nach einem der Ansprüche 1 bis 6, **dadurch gekennzeichnet, dass** mindestens eine Signalleitungsbahn (152) des Signalleitungsbahnenverbundes (184) mit einem Temperatursensor (150) verbunden wird.

8. Verfahren nach einem der Ansprüche 1 bis 7, **dadurch gekennzeichnet, dass** das Ausgangsmaterial für den Signalleitungsbahnenverbund (184) zumindest partiell mit einer Beschichtung versehen ist.

9. Verfahren nach einem der Ansprüche 1 bis 8, **dadurch gekennzeichnet, dass** der Signalleitungsbahnenverbund (184) vor dem Verbinden mit den Zellverbindern (116), den Zellanschlüssen (118) und/oder den Sensorelementen des Zellkontaktierungssystems (100) an einem Trägerelement (102) des Zellkontaktierungssystems (100) festgelegt wird.

10. Verfahren nach Anspruch 9, **dadurch gekennzeichnet, dass** das Trägerelement (102) mindestens eine Durchtrittsöffnung (112) aufweist, welche einen Zugang zu einer Kontaktstelle zwischen dem Signalleitungsbahnenverbund (184) einerseits und einem Zellverbinder (116), einem Zellanschluss (118) und/oder einem Sensorelement des Zellkontaktierungssystems (100) andererseits ermöglicht.

11. Verfahren nach einem der Ansprüche 1 bis 10, **dadurch gekennzeichnet, dass** die Zellverbinder (116) und/oder die Zellanschlüsse (118) sowie die Signalleitungsbahnen (152) des Zellkontaktierungssystems (100) nach dem Verbinden der Zellverbinder (116) und/oder der Zellanschlüsse (118) mit den Signalleitungsbahnen (152) mittels eines Abdeckelements (108) abgedeckt werden.

12. Zellkontaktierungssystem für eine elektrochemische Vorrichtung (111), hergestellt gemäß einem der Ansprüche 1 bis 11,
die mehrere elektrochemische Zellen (113) umfasst, umfassend mindestens einen Zellverbinder (116) zum elektrisch leitenden Verbinden von Zellterminals (115) von elektrochemischen Zellen (113) der elektrochemischen Vorrichtung (111) und
ein Signalleitungssystem (106) mit mehreren Signalleitungsbahnen (152), die mit jeweils einem Zellverbinder (116), Zellanschluss (118) oder Sensorelement des Zellkontaktierungssystems (100) verbunden sind,
wobei durch das Signalleitungssystem (106) Signalquellen (154) oder Messstellen der elektrochemischen Vorrichtung (111) elektrisch leitend mit einem Signalleitungsanschluss (144), der als Schnittstelle zu einer Überwachungseinheit der elektrochemischen Vorrichtung (111) dient, verbunden sind,
wobei die Signalleitungsbahnen (152) durch Heraustrennen durch Ausschneiden oder Ausstanzen eines elektrisch leitenden Signalleitungsbahnenverbundes (184), der mindestens zwei Signalleitungsbahnen (152) und mindestens ein die Signalleitungsbahnen (152) miteinander verbindendes Verbindungselement (186) umfasst, aus einem metallischen Ausgangsmaterial,
stoffschlüssiges oder formschlüssiges Verbinden der Signalleitungsbahnen (152) des Signalleitungsbahnenverbundes (184) mit jeweils einem Zellverbinder (116), Zellanschluss (118) oder Sensorelement des Zellkontaktierungssystems (100) nach dem Heraustrennen des Signalleitungsbahnenverbundes (184) aus dem Ausgangsmaterial und Entfernen des mindestens einen Verbindungselements (186) hergestellt sind,
wobei mindestens zwei Zellverbinder (116) oder Zellanschlüsse (118) durch Heraustrennen durch Ausschneiden oder Ausstanzen eines Stromleiterverbundes (170), der die mindestens zwei Zellverbinder (116) oder Zellanschlüsse (118) und mindestens ein Verbindungselement (172), durch welches mindestens zwei der Zellverbinder (116) oder Zellanschlüsse (118) miteinander verbunden sind, umfasst, aus einem Ausgangsmaterial und
Entfernen des mindestens einen Verbindungselements (172) hergestellt sind.

## Claims

1. A method for producing a cell contact-making system (100) for an electrochemical device (111), including the following:
- separating out by cutting out or stamping out from a metallic starting material at least one electrically-conducting signal conductor track group (184),
wherein the signal conductor track group (184) includes at least two signal conductor tracks (152) of a signal conductor system (106) of the cell contact-making system (100)
and at least one connection element (186), by means of which at least two of the signal conductor tracks (152) are connected to one another, and
wherein by means of the signal conductor system (106) there are electrically connected signal sources (154) or measuring points of the electrochemical device (111) with a signal conductor terminal connector (144), which serves as an interface to a monitoring unit of the electrochemical device (111);
- separating out by cutting out or stamping out from a starting material of a current conductor group (170) which includes at least two cell connectors (116) or cell terminal connectors (118) and at least one connecting element (172), by means of which at least two of the cell connectors (116) or cell terminal connectors (118) are connected together;
- connecting, by means of a substance-to-substance bond or with positive engagement, the signal conductor tracks (152) of the signal conductor track group (184) respectively with a cell connector (116), cell terminal connector (118) or sensor element of the cell contact-making system (100) after the separating out of the signal connector track group (184) from the starting material;
- removing the at least one connection element (186);
wherein the signal conductor tracks (152) and the cell connectors (116) and/or the cell terminal connectors (118) of the cell contact-making system (100) differ from one another in respect of their material and/or their material thickness.

2. A method according to Claim 1, **characterised in that** the signal conductor tracks (152) are formed from a starting material that contains copper.

3. A method according to one of Claims 1 or 2, **characterised in that** the cell connectors (116) and/or cell terminal connectors (118) of the cell contact-making system (100) are formed from a starting material that contains aluminium.

4. A method according to one of Claims 1 to 3, **characterised in that** the signal conductor track group (184) includes, in addition to the signal conductor tracks (152), at least one plug contact or terminal connector pin (146).

5. A method according to Claim 4, **characterised in that** at least one plug contact or terminal connector pin (146) is formed in one piece with at least one signal conductor track (152).

6. A method according to one of Claims 4 or 5, **characterised in that** at least one plug contact or terminal connector pin (146) is connected to a plug housing.

7. A method according to one of Claims 1 to 6, **characterised in that** at least one signal conductor track (152) of the signal conductor track group (184) is connected to a temperature sensor (150).

8. A method according to one of Claims 1 to 7, **characterised in that** the starting material for the signal conductor track group (184) is provided at least partly with a coating.

9. A method according to one of Claims 1 to 8, **characterised in that** the signal conductor track group (184) is fixed to a support element (102) of the cell contact-making system (100) before being connected to the cell connectors (116), cell terminal connectors (118) and/or sensor elements of the cell contact-making system (100).

10. A method according to Claim 9, **characterised in that** the support element (102) has at least one passage opening (112) which enables access to a contact point between the signal conductor track group (184) on the one hand and a cell connector (116), cell terminal connector (118) and/or sensor element of the cell contact-making system (100) on the other hand.

11. A method according to one of Claims 1 to 10, **characterised in that** once the cell connectors (116) and/or cell terminal connectors (118) have been connected to the signal conductor tracks (152), the cell connectors (116) and/or cell terminal connectors (118) and the signal conductor tracks (152) of the cell contact-making system (100) are covered by means of a cover element (108).

12. A cell contact-making system for an electrochemical device (111), produced according to one of claims 1 to 11,
that includes a plurality of electrochemical cells (113), including at least one cell connector (116) for electrically conductively connecting cell terminals (115) of electrochemical cells (113) of the electrochemical device (111) and
a signal conductor system (106) having a plurality of signal conductor tracks (152) which are connected to a respective cell connector (116), cell terminal connector (118) or sensor element of the cell contact-making system (100), wherein by means of the signal conductor system (106) there are electrically connected signal sources (154) or measuring points of the electrochemical device (111) with a signal conductor terminal connector (144), which serves as an interface to a monitoring unit of the electrochemical device (111),
wherein the signal conductor tracks (152) are produced by separating out, by cutting out or stamping out, from a metallic starting material an electrically-conducting signal conductor track group (184), which includes at least two signal conductor tracks (152) and at least one connection element (186) connecting the signal conductor tracks (152) to one another,
connecting, by means of a substance-to-substance bond or with positive engagement, the signal conductor tracks (152) of the signal conductor track group (184) respectively with a cell connector (116), cell terminal connector (118) or sensor element of the cell contact-making system (100) after the separating out of the signal connector track group (184) from the starting material and
removing the at least one connection element (186),
wherein at least two cell connectors (116) or cell terminal connectors (118) are produced by separating out by cutting out or stamping out from a starting material of a current conductor group (170), which includes at least two cell connectors (116) or cell terminal connectors (118) and at least one connection element (172), by means of which at least two of the cell connectors (116) or cell terminal connectors (118) are connected together, and
removing the at least one connection element (172).

## Revendications

1. Procédé de fabrication d'un système de mise en contact de cellules (100) pour un dispositif électrochimique (111), comprenant ce qui suit :
- la séparation par découpage ou estampage au moins d'un composite de pistes d'acheminement de signaux (184) électriquement conducteur d'un matériau de départ métallique ;
dans lequel le composite de pistes d'acheminement de signaux (184) comprend au moins deux pistes d'acheminement de signaux (152) d'un système d'acheminement de signaux (106) du système de mise en contact de cellules (100)
et au moins un élément de liaison (186), par lequel au moins deux des pistes d'acheminement de signaux (152) sont reliées l'une à l'autre, et
dans lequel des sources de signaux (154) ou des points de mesure du dispositif électrochimique (111) sont reliés de manière électriquement conductrice à un raccord d'acheminement de signaux (144), qui fait office d'interface avec une unité de surveillance du dispositif électrochimique (111), par le système d'acheminement de signaux (106) ;
- la séparation par découpage ou estampage d'un composite de conducteur de courant (170), qui comprend au moins deux connecteurs de cellules (116) ou raccords de cellules (118) et au moins un élément de liaison (172), par lequel au moins deux des connecteurs de cellules (116) ou raccords de cellules (118) sont reliés entre eux, d'un matériau de départ ;
- la liaison par liaison de matière ou par complémentarité de forme des pistes d'acheminement de signaux (152) du composite de pistes d'acheminement de signaux (184) à respectivement un connecteur de cellules (116), un raccord de cellules (118) ou un élément de capteur du système de mise en contact de cellules (100) après la séparation du composite de pistes d'acheminement de signaux (184) du matériau de départ ;
- le retrait de l'au moins un élément de liaison (186) ;
dans lequel les pistes d'acheminement de signaux (152) et les connecteurs de cellules (116) et/ou les raccords de cellules (118) du système de mise en contact de cellules (100) se distinguent les uns des autres quant à leur matériau et/ou quant à l'épaisseur de leur matériau.

2. Procédé selon la revendication 1, **caractérisé en ce que** les pistes d'acheminement de signaux (152) sont formées à partir d'un matériau de départ, lequel contient du cuivre.

3. Procédé selon l'une quelconque des revendications 1 ou 2, **caractérisé en ce que** les connecteurs de cellules (116) et/ou les raccords de cellules (118) du système de mise en contact de cellules (100) sont formés à partir d'un matériau de départ, lequel contient de l'aluminium.

4. Procédé selon l'une quelconque des revendications 1 à 3, **caractérisé en ce que** le composite de pistes d'acheminement de signaux (184) comprend, en plus des pistes d'acheminement de signaux (152), au moins un contact d'enfichage ou une broche de raccordement (146).

5. Procédé selon la revendication 4, **caractérisé en ce qu'**au moins un contact d'enfichage ou une broche de raccordement (146) est réalisé ou réalisée d'un seul tenant avec au moins une piste d'acheminement de signaux (152).

6. Procédé selon l'une quelconque des revendications 4 ou 5, **caractérisé en ce qu'**au moins un contact d'enfichage ou une broche de raccordement (146) est relié ou reliée à un carter de fiche.

7. Procédé selon l'une quelconque des revendications 1 à 6, **caractérisé en ce qu'**au moins une piste d'acheminement de signaux (152) du composite de pistes d'acheminement de signaux (184) est reliée à un capteur de température (150).

8. Procédé selon l'une quelconque des revendications 1 à 7, **caractérisé en ce que** le matériau de départ pour le composite de pistes d'acheminement de signaux (184) est pourvu au moins en partie d'un revêtement.

9. Procédé selon l'une quelconque des revendications 1 à 8, **caractérisé en ce que** le composite de pistes d'acheminement de signaux (184) est fixé sur un élément de support (102) du système de mise en contact de cellules (100) avant la liaison aux connecteurs de cellules (116), aux raccords de cellules (118) et/ou aux éléments de capteur du système de mise en contact d'éléments (100).

10. Procédé selon la revendication 9, **caractérisé en ce que** l'élément de support (102) présente au moins une ouverture de passage (112), laquelle permet un accès à un point de contact entre le composite de pistes d'acheminement de signaux (184) d'une part et un connecteur de cellules (116), un raccord de cellules (118) et/ou un élément de capteur du système de mise en contact de cellules (100) d'autre part.

11. Procédé selon l'une quelconque des revendications 1 à 10, **caractérisé en ce que** les connecteurs de cellules (116) et/ou les raccords de cellules (118) ainsi que les pistes d'acheminement de signaux (152) du système de mise en contact de cellules (100) sont recouverts au moyen d'un élément de recouvrement (108) après la liaison des connecteurs de cellules (116) et/ou des raccords de cellules (118) aux pistes d'acheminement de signaux (152).

12. Système de mise en contact de cellules pour un dispositif électrochimique (111), fabriqué selon l'une quelconque des revendications 1 à 11,
qui comprend plusieurs cellules électrochimiques (113), comprenant
au moins un connecteur de cellules (116) pour relier de manière électriquement conductrice des terminaux de cellules (115) de cellules électrochimiques (113) du dispositif électrochimique (111) et
un système d'acheminement de signaux (106) avec plusieurs pistes d'acheminement de signaux (152), qui sont reliées à respectivement un connecteur de cellules (116), un raccord de cellules (118) ou un élément de capteur du système de mise en contact de cellules (100),
dans lequel des sources de signaux (154) ou des points de mesure du dispositif électrochimique (111) sont reliés de manière électriquement conductrice à un raccord d'acheminement de signaux (144), qui fait office d'interface avec une unité de surveillance du dispositif électrochimique (111), par le système d'acheminement de signaux (106),
dans lequel les pistes d'acheminement de signaux (152) sont fabriquées par séparation par découpage ou estampage d'un composite de pistes d'acheminement de signaux (184) électriquement conducteur, qui comprend au moins deux pistes d'acheminement de signaux (152) et au moins un élément de liaison (186) reliant les unes aux autres les pistes d'acheminement de signaux (152), d'un matériau de départ métallique,
par liaison par liaison de matière ou par complémentarité de forme des pistes d'acheminement de signaux (152) du composite de pistes d'acheminement de signaux (184) à respectivement un connecteur de cellules (116), un raccord de cellules (118) ou un élément de capteur du système de mise en contact de cellules (100) après la séparation du composite de pistes d'acheminement de signaux (184) du matériau de départ et
par retrait de l'au moins un élément de liaison (186),
dans lequel au moins deux connecteurs de cellules (116) ou raccords de cellules (118) sont fabriqués par séparation d'un matériau de départ par découpage ou estampage d'un composite conducteur de courant (170), qui comprend au moins deux connecteurs de cellules (116) ou raccords de cellules (118) et au moins un élément de liaison (172), par lequel au moins deux des connecteurs de cellules (116) ou raccords de cellules (118) sont reliés entre eux, et
par retrait de l'au moins un élément de liaison (172).
